# EUROPEAN PATENT SPECIFICATION

(11) **EP 4 178 357 B1**
(45) Date of publication and mention of the grant of the patent: **24.09.2025**
(21) Application number: 21737062.6
(22) Date of filing: 28.06.2021
(51) Int. Cl.: A01N 33/18, A01P 13/02

(54) **METHOD FOR CONTROLLING UNDESIRABLE VEGETATION IN AN AQUATIC ENVIRONMENT**
VERFAHREN ZUR BEKÄMPFUNG UNERWÜNSCHTER VEGETATION IN EINER WÄSSRIGEN UMGEBUNG
PROCÉDÉ DE RÉGULATION DE LA VÉGÉTATION INDÉSIRABLE DANS UN ENVIRONNEMENT AQUATIQUE

(30) Priority: 07.07.2020 EP 20184391; 09.04.2021 EP 21167591
(43) Date of publication of application: 17.05.2023
(73) Proprietor: BASF Agro B.V., 6811 AH Arnhem (NL)
(72) Inventor: AL-AKHDAR, Walid A, Research Triangle Park, North Carolina 27709 (US); FINCH, Charles W, Research Triangle Park, North Carolina 27709 (US); KIRK, Christa Diane, Research Triangle Park, North Carolina 27709 (US)
(74) Representative: BASF IP Association
(86) International application number: PCT/EP2021/067696
(87) International publication number: WO 2022/008285

(56) References cited:
- WO-A1-2014/018398
- CN-A- 101 856 031
- CN-A- 103 039 485
- CN-A- 107 047 575
- CN-A- 107 372 562
- US-A1- 2011 287 934
- AMANPREETMAKKAR ET AL: "Dissipation of Pendimethalin inSoil Under Direct Seeded andTransplanted Rice Field", BULLETIN OF ENVIRONMENTAL CONTAMINATION AND TOXICOLOGY, 12 December 2019 (2019-12-12), pages 293 - 300, XP055749292, Retrieved from the Internet <URL:https://link.springer.com/article/10.1007%2Fs00128-019-02767-y> [retrieved on 20201111]

## Description

The present invention relates to a method for controlling undesirable vegetation in an aquatic environment in which a rice plant is growing. In the method of this invention, a herbicidally effective amount of a composition comprising pendimethalin in the form of microcapsules is applied to the aquatic environment before emergence of the undesirable vegetation and after germination of the rice seedlings. The method is particularly suitable for weed control in flooded rice fields.

### Background of the invention

Rice is the most important human food crop in the world, directly feeding more people than any other crop. Two rice species are important cereals for human nutrition: *Oryza sativa* L., the Asian rice, and *O. glaberrima* Steud., the African rice. *O*. *sativa* L. constitutes virtually all of the world's cultivated rice and is also grown in the United States, inter alia in the Central Valleys of California.

Weeds are a major challenge in rice production and can account to 59% yield loss with watergrasses (*Echinochloa* spp.) and up to 100% in dry-seeded systems in California (Brim-DeForest, W.B., Al-Khatib, A. and Fischer, A.J. (2017). Predicting yield losses in rice mixed-weed species infestations in California. Weed Science, 65, pp. 61-71). Major competitive watergrass species include barnyardgrass (*Echinochloa crus-galli),* early watergrass (*Echinochloa oryzoides),* late watergrass (*Echinochloa phyllopogon)* and Sprangletop (*Leptochloa fusca*).

Rice is a semi-aquatic crop that benefits from flooded soil conditions during part or all of the growing season. Rice production in the United States can be broadly categorized as either dry-seeded or water-seeded. In the dry-seeded system, rice is sown into a well-prepared seed bed with a grain drill or by broadcasting the seed and incorporating it with a disk or harrow. Moisture for seed germination is from irrigation or rainfall. Another method of planting by the dry-seeded system is to broadcast the seed by airplane into a flooded field, then promptly drain the water from the field. For the dry-seeded system, when the plants have reached sufficient size (four-to five-leaf stage), a shallow permanent flood of water 5 to 16 cm deep is applied to the field for the remainder of the crop season. Rice varieties are favorable that grow quickly as seedlings to compete with weeds and accelerate the application of a permanent flood that suppresses the growth of grassy weeds. Residual grass herbicides are also used to prevent the emergence of new weeds.

In the water-seeded system, rice seed is soaked for 12 to 36 hours to initiate germination, and the seed is broadcast by airplane into a flooded field. This is the predominant rice production system in California. Some herbicides are applied pre-emergence (applied to soil before flooding) and some applied at the date of seeding or early in the first few weeks of rice seedling growth. Controlling weeds at germination or when they are young reduces competition with the rice seedling, hastening the rice plant growth and canopy closure that helps suppress weeds. Weeds are also much easier to control when in the early stages of growth. Pre-emergence application have advantages to the grower in that they can be accomplished at the final stage of seedbed preparation by ground as opposed to an aerial application when the field is flooded.

Aerial application of pesticides is subject to regulation and restriction due to potential drift or movement, and some rice herbicide materials cannot be applied by air in California. In some cases, the herbicides are not liquid sprays but granules that disperse in the flooded paddy to control the weeds. This is of great advantage to prevent drift or movement of the herbicide from the target field. Maintaining a permanent flood supports the control of grassy weeds, especially in combination with selective grass herbicides. The aquatic weeds (e.g. sedges and rushes), however are favored by the permanent flood. The water-seeded system lends itself to the water infrastructure, delivery to the fields, and management in California.

The rice seedlings emerge through a shallow flood, or the water may be drained from the field for a short period of time to enhance seedling establishment. Lowering the water improves stand establishment by providing additional oxygen that enhances root growth and better anchoring the seedling against uprooting by wind and wave action. It also exposes weeds for contact herbicide applications. However, this promotes grassy weed growth, nitrogen loss, and increased water consumption and management. Herbicide use on rice can injure the rice plant and reduce plant growth, shorten the height, delay maturity and possibly reduce yield. Draining the field or lowering the water is used to lessen herbicide injury; however, this may not be possible because of water hold periods required for an herbicide, and water management and use efficiency. In recent years, due to environmental regulations, appearance of herbicide resistant weeds and phasing out of older herbicides, weed control in commercial rice production in California has become a primary production issue for growers.

Pendimethalin has been used as a preemergence herbicide to control weeds in dry direct-seeded rice. This active ingredient can also be used alone or with a tank mix partner for early post-emergence weed control in dry-seeded rice and for post-emergence weed control in water-seeded rice. In the latter two applications, however, the rice fields must be completely drained and free of standing water before application. This is because soil and weeds must be completely exposed to spray coverage and no flood water should be on the field at the time of application. Further, the use of pendimethalin is limited to the use after the rice seed has germinated. The reason for this limitation is that pendimethalin is a root inhibitor and is therefore toxic to germinating rice seed.

WO 2014/018398 A1 discloses herbicidal compositions comprising (a) 4-amino-3-chloro-5-fluoro-6-(4-chloro-2-fluoro-3-methoxyphenyl)pyridine-2-carboxylic acid or an agriculturally acceptable ester or salt thereof and (b) a microtubule inhibiting herbicide and also methods of controlling undesirable vegetation comprising applying components (a) and (b). Pendimethalin is mentioned as a possible microtubule inhibiting herbicide (b).

CN 103039485 A discloses a herbicide mixture containing cinosulfuron and pendimethalin as main effective components wherein the mass ratio of cinosulfuron to pendimethalin is 0.1-80: 0.1-80 and its use for post-emergence weed control in rice paddy fields.

CN 107047575 A discloses a herbicide composition containing oxaziclomefone and pendimethalin as active components, wherein the weight ratio of oxaziclomefone to pendimethalin is (99:1) - (1:99), and its use for combating annual weeds in rice seedling fields, tobacco, rice field transplants and transplanted rice fields, barnyard grass and corn field weeds.

CN 101856031 A discloses, inter alia, a herbicide composition containing cyhalofop-butyl, pyrazosulfuron-ethyl and pendimethalin in a specific mass ratio which is prepared in three different formulation types, i.e., water-dispersible granules, suspending agent or wettable powder, and applied as a post-emergence herbicide.

CN 107372562 A discloses a herbicide composition of pendimethalin, clomazone and pyrazosulfuron-ethyl as active ingredients in a weight ratio of (1-88):(1-88):(1-88) and its use for preventing and controlling annual weeds and barnyard grass in direct-seeded rice fields.

US 2011/287934 A1 discloses a herbicide combination for controlling harmful plants in rice crops, wherein the herbicide combination comprises (A) certain broad-spectrum herbicides of formula (A1) such as, for example, glufosinate and its salts, L-glufosinate and its salts and bialaphos and its salts, and (B) a pyridine or pyrimidinecarboxylic acid and its derivative of formula (B1), and wherein the rice crops are tolerant to the herbicides (A) and (B) present in the combination.

Nevertheless, there is still a need to control weeds (especially aquatic weeds) in flooded rice. It is also desirable to develop practices for preventing, delaying or managing herbicide-resistant weeds (especially herbicide-resistant aquatic weeds) in flooded rice. Further, there is still a need to control weeds (especially aquatic weeds) in flooded rice while at the time preventing or minimizing injury to and/or yield loss in the crop species.

### Summary of the invention

Thus, an object of the present invention lies in the effective control of weeds (especially aquatic weeds) in flooded rice.

Another object of the present invention is to effectively control herbicide-resistant weeds (especially herbicide-resistant aquatic weeds) in flooded rice.

Yet another object of the present invention lies in the effective control of weeds (especially aquatic weeds) in flooded rice without injury to and/or yield loss in the crop species.

These and further objects are achieved by the method as described below.

Accordingly, in one aspect of the invention there is provided a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein pendimethalin is present in the composition in the form of microcapsules.

Pendimethalin is the common name of the herbicidal compound with the IUPAC name N-(1-ethylpropyl)-2,6-dinitro-3,4-xylidine and the Chemical Abstracts name N-(1-ethylpropyl)-3,4-dimethyl-2,6-dinitrobenzenamine (CAS RN 40487-42-1) that is described in the The Pesticide Manual, Fourteenth Edition, Editor: C.D.S. Tomlin, British Crop Production Council, 2006, entry 640, pages 805-806.

The term "herbicidally effective amount" denotes an amount of the active ingredient(s), which is sufficient for controlling unwanted plants, especially for controlling unwanted plants in cultivated plants and which does not result in a substantial damage to the treated plants. Such an amount can vary in a broad range and is dependent on various factors, such as the plants to be controlled, the treated cultivated plant or material, the climatic conditions and the specific composition according to the invention used.

The terms "plants" and "vegetation", as used herein, include germinant seeds, emerging seedlings, plants emerging from vegetative propagules, and established vegetation.

The term "locus", as used herein, means the area in which the undesirable vegetation or rice plants are growing or will grow.

The terms "controlling" and "combating", as used herein, are synonyms.

The terms "undesirable vegetation", "harmful plants", "unwanted plants", "weeds" and "weed species", as used herein, are synonyms.

The term "aquatic environment", as used herein, means any standing water in which a rice plant is growing and requires pre-emergent weed control such as, for example, a flooded rice field, a flooded rice paddy, a pond or a lake. Preferably, the aquatic environment is a flooded rice field, a flooded rice paddy, a pond or a lake, more preferably a flooded rice field or a flooded rice paddy and in particular a flooded rice field.

As used herein, ranges specifically include the values provided as endpoint values of the range. As used herein, ranges specifically include all the integer values of the range. For example, a range of 1 to 100 or from 1 to 100 specifically includes the end point values of 1 and 100.

Further embodiments of the invention are evident from the description, the examples and the claims. It is to be understood that the features mentioned above and still to be illustrated below of the subject matter of the invention can be applied not only in the combination given in each particular case but also in other combinations, without leaving the scope of the invention.

### Detailed description of the invention

Surprisingly, it has been found that pendimethalin provides effective pre-emergence weed control when applied to an aquatic environment in which rice plants are cultivated such as, for example, a flooded rice field after germination of the rice seedlings.

Another advantage of this invention is that a suitable composition or formulation tof pendimethalin can be applied directly into or onto the water of an aquatic environment (in particular a flooded rice field or paddy), such that the active ingredient becomes dispersed in the total water volume of the flooded rice field or paddy but also quickly settles into the seed zone, resulting in the active ingredient coming into contact with the weed seed and inhibiting germination. This result is all the more surprising because pendimethalin has hitherto only been applied to completely drained rice fields and commercial pendimethalin products were assumed to not settle into the weed germination zone due to an expected low sedimentation rate of the pendimethalin particles.

Furthermore, the method of the present invention provides effective control of common grass weeds occurring in flooded rice fields in e.g. California, United States, in particular various Echinochloa species (*Echinochloa spp.,* e.g. common barnyardgrass) and bearded sprangletop (*Leptochloa fusca subsp. fascicularis*) which are the most troublesome and difficult to control and could cause significant yield reduction if left uncontrolled.

Yet another advantage is that the method of this invention does not cause injury of the rice plants. This is because the rice plant has germinated and grown out of the stage where pendimethalin may damage the plant, but still be effective at controlling weed germination.

In a preferred embodiment, a liquid formulation comprising pendimethalin, each being optionally diluted with water, is applied. The term "being optionally diluted with water" as used herein means in each case that the respective formulation is present or applied either undiluted or diluted with water. Exemplary liquid formulations include capsule suspensions (CS). Any of the aforementioned liquid formulations are normally intended for dilution with water before application. In certain embodiments, the aforementioned liquid formulations can also be applied neat without dilution with water such as, for example, the application of capsule suspensions (CS) by drones.

The aforementioned and further formulation types are defined in the "Catalogue of pesticide formulation types and international coding system", Technical Monograph No. 2, 6th Ed. May 2008, CropLife International.

The aforementioned formulations can be prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetting agents, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders. Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emulsifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkyl naphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-substituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolygluco-sides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of pendimethalin on the target. Examples are surfactants, mineral or vegetable oils, and other auxiliaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), inorganic clays (organically modified or unmodified), polycarboxylates, and silicates.

Suitable bactericides are bronopol and isothiazolinone derivatives such as alkylisothiazolinones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable tackifiers or binders are polyvinylpyrrolidons, polyvinylacetates, polyvinyl alcohols, polyacrylates, biological or synthetic waxes, and cellulose ethers.

Examples for the aforementioned formulation types and their preparation are given below:

### iii) Capsule suspensions (CS)

An oil phase comprising 5-70 wt% of pendimethalin or a composition comprising pendimethalin and at least one further compound selected from the herbicides B (as defined herein) and safeners C (as defined herein), 0-40 wt% water insoluble organic solvent (e.g. aromatic hydrocarbon), 2-15 wt% acrylic monomers (e.g. methylmethacrylate, methacrylic acid and a di- or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising 5-50 wt% of pendimethalin, 0-40 wt% water insoluble organic solvent (e.g. aromatic hydrocarbon), and an isocyanate monomer (e.g. diphenylmethene-4,4'-diisocyanate) are dispersed into an aqueous solution of a protective colloid (e.g. polyvinyl alcohol). The addition of a polyamine (e.g. hexamethylenediamine) results in the formation of polyurea microcapsules. The monomers amount to 1-10 wt%. The wt% relate to the total CS formulation.

The aforementioned formulation type iii) may optionally comprise further auxiliaries, such as 0.1-1 wt% bactericides, 5-15 wt% anti-freezing agents, 0.1-1 wt% anti-foaming agents, and 0.1-1 wt% colorants.

Most preferably, a capsule suspension (CS) comprising pendimethalin being optionally diluted with water is applied. In another embodiment, a capsule suspension (CS) comprising pendimethalin or a capsule suspension (CS) comprising pendimethalin being diluted with water is applied. In another embodiment, a capsule suspension (CS) comprising pendimethalin is applied.

In another embodiment, a capsule suspension (CS) comprising pendimethalin being diluted with water is applied.

Most preferably, the composition comprising pendimethalin is a capsule suspension (CS) comprising pendimethalin being optionally diluted with water. In another embodiment, the composition comprising pendimethalin is a capsule suspension (CS) comprising pendimethalin or a capsule suspension (CS) comprising pendimethalin being diluted with water. In another embodiment, the composition comprising pendimethalin is a capsule suspension (CS) comprising pendimethalin. In another embodiment, the composition comprising pendimethalin is a capsule suspension (CS) comprising pendimethalin being diluted with water.

Most preferably, a capsule suspension (CS) comprising pendimethalin or a dilute aqueous suspension obtained from diluting a capsule suspension (CS) comprising pendimethalin with water is applied. In another embodiment, a dilute aqueous suspension obtained from diluting a capsule suspension (CS) comprising pendimethalin with water is applied.

Most preferably, the composition comprising pendimethalin is a capsule suspension (CS) comprising pendimethalin or a dilute aqueous suspension obtained from diluting a capsule suspension (CS) comprising pendimethalin with water. In another embodiment, the composition comprising pendimethalin is a dilute aqueous suspension obtained from diluting a capsule suspension (CS) comprising pendimethalin with water.

As an example of a capsule suspension (CS) that can be used in this invention, the product PROWL^{®} H₂O (BASF Corporation, Research Triangle Park, N.C., U.S.A.) may be mentioned. PROWL^{®} H₂O is an aqueous capsule suspension containing 38.7% active ingredient pendimethalin or 1.72 kg (3.8 lbs) active ingredient pendimethalin per 3.78 L (1 gallon) and 61.3% other ingredients.

In the method of this invention, the capsule suspension (CS) comprising pendimethalin is applied neat or diluted with water. In one embodiment, the capsule suspension (CS) comprising pendimethalin is applied neat (e.g. when applied by drones). In another embodiment, the capsule suspension (CS) comprising pendimethalin is diluted with water and applied as a dilute aqueous suspension obtained from diluting a capsule suspension (CS) comprising pendimethalin with water. Typical dilution rates are in the range of 1 part by volume of the capsule suspension (CS) per up to 20 parts by volume, preferably up to 10 parts by volume and more preferably up to 8 parts by volume of water. The D₅₀ of the capsules in the capsule suspension (CS) comprising pendimethalin or the dilute aqueous suspension obtained from diluting a capsule suspension (CS) comprising pendimethalin with water is in the range of from 1 to 100 µm, preferably from 1 to 50 µm and more preferably from 5 to 20 µm. The density of the capsules at 20°C is generally in the range of from 1.06 to 1.4 g/ml.

In the present invention, the D₅₀ particle size values given represent the volume median particle size derived from measuring the particle size volume distribution using laser diffraction particle size analysis. The notation Dₓ means that X % of the particles (volume distribution) have a diameter value below a specified diameter D. For example, a D₅₀ of 20 µm means that 50% of the particles (volume distribution) have a diameter of less than 20 µm. The volume median diameter can be determined, for example, by wet measurement using a laser diffraction particle size distribution measuring apparatus. More specifically, capsules are dispersed in water and then the volume median diameter is measured using the apparatus. The laser diffraction particle size distribution measuring apparatus includes, for example, Mastersizer 3000 (manufactured by Malvern Instruments Ltd.).

As methods for determining the density of the capsules, standard practices such as the pycnometer method or dynamic mechanical analysis (e.g. with a density meter DMA 4500 M from Anton Paar) as well as CIPAC method MT 3 can be used.

The application of the herbicidally effective amount of the composition comprising pendimethalin to the aquatic environment (in particular a flooded rice field or paddy) can be accomplished by any means that deliver the active ingredient pendimethalin to the water surface or directly into the water body of the aquatic environment (in particular a flooded rice field or paddy) such that pendimethalin becomes dispersed in the total water volume of the aquatic environment (in particular a flooded rice field or paddy) and settles into the weed germination zone.

In a preferred embodiment, a herbicidally effective amount of the composition comprising pendimethalin is applied into the water or onto the water surface of the aquatic environment (in particular a flooded rice field or paddy), more preferably onto the water surface of the aquatic environment (in particular a flooded rice field or paddy). Most preferably, a herbicidally effective amount of a capsule suspension (CS) comprising pendimethalin being optionally diluted with water) is applied into the water or onto the water surface of the aquatic environment (in particular a flooded rice field or paddy), in particular onto the water surface of the aquatic environment (in particular a flooded rice field or paddy). Most preferably, a herbicidally effective amount of a capsule suspension (CS) comprising pendimethalin or a dilute aqueous suspension obtained from diluting a capsule suspension (CS) comprising pendimethalin with water is applied into the water or onto the water surface of the aquatic environment (in particular a flooded rice field or paddy), more preferably onto the water surface of the aquatic environment (in particular a flooded rice field or paddy).

In another preferred embodiment, a herbicidally effective amount of the composition comprising pendimethalin is applied by water-injection treatment, in-water treatment, or application onto the water surface of the aquatic environment (in particular a flooded rice field or paddy), more preferably by application onto the water surface of the aquatic environment (in particular a flooded rice field or paddy). Even more preferably, , a herbicidally effective amount of a capsule suspension (CS) comprising pendimethalin being optionally diluted with water is applied by water-injection treatment, in-water treatment, or application onto the water surface of the aquatic environment (in particular a flooded rice field or paddy), more preferably by application onto the water surface of the aquatic environment (in particular a flooded rice field or paddy). Most preferably, a herbicidally effective amount of a capsule suspension (CS) comprising pendimethalin or a dilute aqueous suspension obtained from diluting a capsule suspension (CS) comprising pendimethalin with water is applied by water injection treatment, in-water treatment, or application onto the water surface of the aquatic environment (in particular a flooded rice field or paddy), more preferably by application onto the water surface of the aquatic environment (in particular a flooded rice field or paddy).

In yet another preferred embodiment, the method of this invention comprises spraying a herbicidally effective amount of a capsule suspension (CS) comprising pendimethalin or a dilute aqueous suspension obtained from diluting a capsule suspension (CS) comprising pendimethalin with water into the water or onto the water surface of the aquatic environment (in particular a flooded rice field or paddy), more preferably onto the water surface of the aquatic environment (in particular a flooded rice field or paddy).

The application of a herbicidally effective amount of the composition comprising pendimethalin (most preferably of a capsule suspension (CS) comprising pendimethalin or a dilute aqueous suspension obtained from diluting a capsule suspension (CS) comprising pendimethalin with water) can be accomplished by the use of conventional ground or aerial dusters, sprayers, granule applicators including aerial (unmanned drone, airplane and helicopter) applications methods and by other conventional means known to those skilled in the art.

Application rates useful with the method described herein can be from 0.1 to 10 kilograms active ingredient (i.e. pendimethalin) per hectare (kg ai/ha), preferably from 0.2 to 8 kg ai/ha, more preferably from 0.5 to 5 kg ai/ha, even more preferably from 1 to 5 kg ai/ha, yet more preferably from 1 to 4 kg ai/ha, still more preferably from 1 to 3 kg ai/ha and in particular from 1 to 2.5 kg ai/ha. Additional examples of useful application rates include, but are not limited to, less than or equal to 10 kg ai/ha, less than or equal to 8 kg ai/ha, less than or equal to 5 kg ai/ha, less than or equal to 4 kg ai/ha, less than or equal to 3 kg ai/ha and less than or equal to 2.5 kg ai/ha.

The rice plant is selected from Oryza spp. such as Oryza sativa L. and Oryza glaberrima, most preferably Oryza sativa L.. In another embodiment, the rice plant is selected from flooded dry-seeded, drill-seeded, wet-seeded, water-seeded and transplanted rice.

The method described herein are also suitable to control undesirable vegetation in herbicide-tolerant rice, in particular glyphosate-tolerant-, glufosinate-tolerant-, dicamba-tolerant-, phenoxy auxin-tolerant-, pyridyloxy auxin-tolerant-, aryloxyphenoxypropionate-tolerant-, acetyl CoA carboxylase (ACCase) inhibitor-tolerant-, imidazolinone-tolerant-, acetolactate synthase (ALS) inhibitor-tolerant-, 4-hydroxyphenyl-pyruvate dioxygenase (HPPD) inhibitor-tolerant-, protoporphyrinogen oxidase (PPO) inhibitor-tolerant-, triazine-tolerant-, and bromoxynil-tolerant-rice. Examples of commercialized herbicide-tolerant rice include quizalofop-P-ethyl-tolerant Provisia^{™} rice and imazamox-tolerant Clearfield^{®} rice (both from BASF).

Although different varieties develop at different rates, and environmental factors strongly affect the duration of the different growth stages, the growth stages are well characterized, and defined on the rice in the BBCH monograph "Growth stages of mono-and dicotyledonous plants", 2^{nd} edition, 2001, ed. Uwe Meier, Federal Biological Research Centre for Agriculture and Forestry (Biologische Bundesanstalt für Land- und Forstwirtschaft). The BBCH scale provides a system for a uniform coding of phenologically similar growth stages of plants. The early BBCH principal growth stages for rice, i.e. 0 (Germination) and 1 (Leaf development) are shown in the table below.

| Code | Description |
|---|---|
| Principal growth stage 0: Germination | |
| 00 | Dry seed (caryopsis) |
| 01 | Beginning of seed imbibition |
| 03 | Seed imbibition complete (pigeon-breast) |
| 05 | Radicle emerged from caryopsis |
| 06 | Radicle elongated, root hairs and/or side roots visible |
| 07 | Coleoptile emerged from caryopsis (in water-rice this stage occurs before stage 05) |
| 09 | Imperfect leaf emerges (still rolled) at the tip of the coleoptile |

| Principal growth stage 1: Leaf development | |
|---|---|
| 10 | Imperfect leaf unrolled, tip of first true leaf visible |
| 11 | First leaf unfolded |
| 12 | 2 leaves unfolded |
| 13 | 3 leaves unfolded |
| 14 | 4 leaves unfolded |
| 15 | 5 leaves unfolded |
| 16 | 6 leaves unfolded |
| 17 | 7 leaves unfolded |
| 18 | 8 leaves unfolded |
| 19 | 9 or more leaves unfolded |

In the method of this invention, a herbicidally effective amount of the composition comprising pendimethalin can generally be applied at any pre-harvest stage after the germination of the rice seedlings. In a preferred embodiment of the method of this invention, a herbicidally effective amount of the composition comprising pendimethalin is applied from the 2-leaf to the 9-leaf growth stage of the rice seedlings (BBCH Code 12 to 19), more preferably from the 2-leaf to the 6-leaf growth stage of the rice seedlings (BBCH Code 12 to 16) and even more preferably from the 4-leaf to the 6-leaf growth stage of the rice seedlings (BBCH Code 14 to 16).

In another preferred embodiment of the method of this invention, a herbicidally effective amount of the composition comprising pendimethalin is applied from the 2-leaf to the 4-leaf growth stage of the rice seedlings (BBCH Code 12 to 14).

In another embodiment of this invention, a herbicidally effective amount of the composition comprising pendimethalin is applied at the 2-leaf growth stage of the rice seedlings (BBCH Code 12). In another embodiment, a herbicidally effective amount of the composition comprising pendimethalin is applied at the 3-leaf growth stage of the rice seedlings (BBCH Code 13). In another embodiment, a herbicidally effective amount of the composition comprising pendimethalin is applied at the 4-leaf growth stage of the rice seedlings (BBCH Code 14). In another embodiment, a herbicidally effective amount of the composition comprising pendimethalin is applied at the 5-leaf growth stage of the rice seedlings (BBCH Code 15). In another embodiment, a herbicidally effective amount of the composition comprising pendimethalin is applied at the 6-leaf growth stage of the rice seedlings (BBCH Code 16). In another embodiment, a herbicidally effective amount of the composition comprising pendimethalin is applied at the 7-leaf growth stage of the rice seedlings (BBCH Code 17). In another embodiment, a herbicidally effective amount of the composition comprising pendimethalin is applied at the 8-leaf growth stage of the rice seedlings (BBCH Code 18). In another embodiment, a herbicidally effective amount of the composition comprising pendimethalin is applied at the 9-leaf or more growth stage of the rice seedlings (BBCH Code 19).

In yet another preferred embodiment, a herbicidally effective amount of the composition comprising pendimethalin is applied from 5 to 15 days, more preferably 5 to 10 days and even more preferably from 7 to 10 days after the rice seeds have been sown or after the rice plants have been transplanted.

In still another preferred embodiment, a herbicidally effective amount of the composition comprising pendimethalin is applied from 5 to 15 days, more preferably 5 to 10 days and even more preferably from 7 to 10 days after the rice seeds have been sown or after the rice plants have been transplanted at an application rate of from 1 to 5 kg ai/ha, preferably from 1 to 4 kg ai/ha, more preferably from 1 to 3 kg ai/ha and in particular from 1 to 2.5 kg ai/ha.

In yet another preferred embodiment, a herbicidally effective amount of the composition comprising pendimethalin is applied from 5 to 15 days, more preferably 5 to 10 days and even more preferably from 7 to 10 days after the rice seeds have been sown or after the rice plants have been transplanted at an application rate of from 1 to 5 kg ai/ha.

In yet another preferred embodiment, a herbicidally effective amount of the composition comprising pendimethalin is applied from 5 to 15 days, more preferably 5 to 10 days and even more preferably from 7 to 10 days after the rice seeds have been sown or after the rice plants have been transplanted at an application rate of from 1 to 4 kg ai/ha.

In yet another preferred embodiment, a herbicidally effective amount of the composition comprising pendimethalin is applied from 5 to 15 days, more preferably 5 to 10 days and even more preferably from 7 to 10 days after the rice seeds have been sown or after the rice plants have been transplanted at an application rate of from 1 to 3 kg ai/ha.

In yet another preferred embodiment, a herbicidally effective amount of the composition comprising pendimethalin is applied from 5 to 15 days, more preferably 5 to 10 days and even more preferably from 7 to 10 days after the rice seeds have been sown or after the rice plants have been transplanted at an application rate of from 1 to 2.5 kg ai/ha. The method of the present invention is suitable for controlling a large number of undesirable vegetation (harmful plants) including monocotyledonous weeds (in particular grasses, sedges and rushes) and dicotyledonous (broadleaf) weeds.

Exemplary monocotyledonous weeds that can be controlled by the method of this invention are selected from the genera Aegilops, Avena, Brachiaria, Bromus, Cenchrus, Chloris, Cyperus, Dactyloctenium, Digitaria, Echinochloa, Eleusine, Eriochloa, Leptochloa, Lolium, Panicum, Phalaris, Poa, Rottboellia, Setaria, Sorghum and Urochloa. Preferably, the undesirable vegetation is a monocotyledonous weed species selected from the genera Cyperus, Echinochloa and Leptochloa. More preferably, the undesirable vegetation is a monocotyledonous weed species selected from the genera Echinochloa and Leptochloa. In particular, the undesirable vegetation is a monocotyledonous weed species selected from the genus Echinochloa. In another particularly preferred embodiment, the undesirable vegetation is a monocotyledonous weed species selected from the genus Leptochloa.

Specific examples of monocotyledonous weed species that can be controlled by the method of this invention are selected from Aegilops cylindrical (AEGCY, jointed goatgrass), Avena fatua (AVEFA, wild oat), Brachiaria platyphylla (BRAPP, broadleaf signalgrass), Brachiaria texana (PANTA, Texas panicum), Bromus commutato (BROCO, hairy chess), Bromus japonicus (BROJA, Japanese brome), Bromus secalinus (BROSE, cheat), Bromus tectorum (BROTE, downy brome), Cenchrus spinifex (CCHPA, field sandbur), Chloris barbata (CHRBA, swollen fingergrass), Cyperus difformis (CYPDI, small-flower umbrella sedge), Cyperus eragrostis (CYPER, lovegrass sedge), Dactyloctenium aegyptium (DTTAE, crowfoot grass), Digitaria sanguinalis (DIGSA, large crabgrass), Echinochloa colonum (ECHCO, jungle rice), Echinochloa crus-galli (ECHCG, common barnyard grass), Echinochloa muricata (ECHPU, prickly barnyardgrass), Echinochloa muricata var. microstachya (ECHCM, rough barnyardgrass), Echinochloa oryzicola (ECHCR, late watergrass), Echinochloa oryzoides (ECHOR, early watergrass), Echinochloa walteri (ECHWA, water millet), Eleusine indica (ELEIN, goosegrass), Eriochloa villosa (ERBVI, woolly cupgrass) , Leptochloa fusca subsp. uninervia (LEFUN, Mexican sprangletop), Leptochloa fusca subsp. fascicularis (LEFFA, bearded sprangletop), Lolium multiflorum (LOLMU, Italian ryegrass), Lolium rigidum (LOLRI, annual ryegrass), Panicum capillare (PANCA, witchgrass), Panicum dichotomiflorum (PANDI, fall panicum), Panicum miliaceum (PANMI, wild proso millet), Phalaris canariensis (PHACA, canarygrass), Poa annua (POAAN, annual bluegrass), Rottboellia cochinchinensis (ROOEX, itch grass), Setaria faberi (SETFA, giant foxtail), Setaria pumila (SETPU, yellow foxtail), Setaria viridis (SETVI, green foxtail), Sorghum halepense (SORHA, Johnson grass), Sorghum x drummondii (SORSU, shattercane), Urochloa fusca (PANFA, browntop panicum) and Urochloa maxima (PANMA, guineagrass). Preferably, the undesirable vegetation is a monocotyledonous weed species selected from Cyperus difformis (CYPDI, small-flower umbrella sedge), Echinochloa colonum (ECHCO, jungle rice), Echinochloa crus-galli (ECHCG, common barnyard grass), Echinochloa muricata (ECHPU, prickly barnyardgrass), Echinochloa muricata var. microstachya (ECHCM, rough barnyardgrass), Echinochloa oryzicola (ECHCR, late watergrass), Echinochloa oryzoides (ECHOR, early watergrass), Echinochloa walteri (ECHWA, water millet), Leptochloa fusca subsp. uninervia (LEFUN, Mexican sprangletop), and Leptochloa fusca subsp. fascicularis (LEFFA, bearded sprangletop). More preferably, the undesirable vegetation is a monocotyledonous weed species selected from Cyperus difformis (CYPDI, small-flower umbrella sedge), Echinochloa crus-galli (ECHCG, common barnyard grass), Echinochloa muricata (ECHPU, prickly barnyardgrass), Echinochloa oryzicola (ECHCR, late watergrass), Echinochloa oryzoides (ECHOR, early watergrass), Leptochloa fusca subsp. uninervia (LEFUN, Mexican sprangletop), and Leptochloa fusca subsp. fascicularis (LEFFA, bearded sprangletop). Even more preferably, the undesirable vegetation is a monocotyledonous weed species selected from Cyperus difformis (CYPDI, small-flower umbrella sedge), Echinochloa crus-galli (ECHCG, common barnyard grass), Echinochloa oryzicola (ECHCR, late watergrass), and Leptochloa fusca subsp. fascicularis (LEFFA, bearded sprangletop). Yet more preferably, the undesirable vegetation is a monocotyledonous weed species selected from Echinochloa crus-galli (ECHCG, common barnyard grass), Echinochloa oryzicola (ECHCR, late watergrass), and Leptochloa fusca subsp. fascicularis (LEFFA, bearded sprangletop). In particular, the undesirable vegetation is Echinochloa crus-galli (ECHCG, common barnyard grass). In another particularly preferred embodiment, the undesirable vegetation is Leptochloa fusca subsp. fascicularis (LEFFA, bearded sprangletop).

Exemplary dicotyledonous or broadleaf weeds that can be controlled by the method of this invention are selected from the genera Abutilon, Amaranthus, Ammannia, Amsinckia, Anchusa, Bacopa, Barbarea, Bassia, Brassica, Calandrinia, Capsella, Chamaesyce, Chenopodium, Cuscuta, , Erodium, Heteranthera, Ipomoea, Lactuca, Lamium, Mollugo, Persicaria, Polygonum, Pontederia, Portulaca, Richardia, Schoenoplectiella, Senecio, Sida, Sinapis, Sisymbrium, Solanum, Stellaria and Tribulus. Preferably, the undesirable vegetation is a dicotyledonous or broadleaf weed species selected from the genera Ammannia, Bacopa, Heteranthera, Pontederia, and Schoenoplectiella. More preferably, the undesirable vegetation is a dicotyledonous or broadleaf weed species selected from the genus Ammannia.

Specific examples of dicotyledonous or broadleaf weeds that can be controlled by the method of this invention are selected from Abutilon theophrasti (ABUTH, velvet leaf), Amaranthus palmeri (AMAPA, Palmer amaranth), Amaranthus retroflexus (AMARE, pigweed), Amaranthus tuberculatus (AMATU, tall waterhemp), Ammannia auriculata (AMMAU, redstem), Ammannia coccinea (AMMCO, purple redstem), Amsinckia menziesii (ANSME, fiddleneck), Anchusa arvensis (LYCAR, small bugloss), Bacopa monnieri (BAOMO, Monnier water hyssop), Barbarea vulgaris (BARVU, bittercress), Bassia scoparia (KCHSC, kochia), Brassica nigra (BRSNI, black mustard), Calandrinia ciliata subsp. menziesii (CLNCM, redmaids rock purslane), Capsella bursa-pastoris (CAPBP, shepherd's purse), Chamaesyce maculata (EPHMA, annual spurge), Chenopodium album (CHEAL, common lambsquarters), Chenopodium leptophyllum (CHELE, slimleaf lambsquarters), Cuscuta europaea (CVCAU, large dodder), Erodium cicutarium (EROCI, redstem filaree), Heteranthera limosa (HETLI, duck salad), Ipomoea hederacea (IPOHE, morningglory), Lactuca serriola (LACSE, prickly lettuce), Lamium amplexicaule (LAMAM, henbit), Mollugo verticillata (MOLVE, carpetweed), Persicaria maculosa (POLPE, ladysthumb), Persicaria pensylvanica (POLPY, Pennsylvania smartweed), Polygonum aviculare (POLAV, prostrate knotweed), Pontederia vaginalis (MOOVA, monochoria), Portulaca oleracea (POROL, purslane), Richardia scabra (RCHSC, Florida pusley), Schoenoplectiella mucronata (SCPMU, rice-field bulrush), Senecio vulgaris (SENVU, common groundsel), Sida spinosa (SIDSP, prickly sida), Sinapis arvensis (SINAR, wild mustard), Sisymbrium irio (SSYIR, London rocket), Solanum nigrum (SOLNI, black nightshade), Stellaria media (STEME, common chickweed) and Tribulus terrestris (TRBTE, common puncturevine).

Preferably, the undesirable vegetation is a dicotyledonous or broadleaf weed species selected from Ammannia auriculata (AMMAU, redstem), Ammannia coccinea (AMMCO, purple redstem), Bacopa monnieri (BAOMO, Monnier water hyssop), Heteranthera limosa (HETLI, duck salad), Pontederia vaginalis (MOOVA, monochoria), and Schoenoplectiella mucronata (SCPMU, rice-field bulrush). More preferably, the undesirable vegetation is Ammannia auriculata (AMMAU, redstem) or Ammannia coccinea (AMMCO, purple redstem). In one especially preferred embodiment, the undesirable vegetation is Ammannia auriculata (AMMAU, redstem). In another especially preferred embodiment, the undesirable vegetation is Ammannia coccinea (AMMCO, purple redstem).

In another preferred embodiment, the undesirable vegetation is selected from the genera Aegilops, Avena, Brachiaria, Bromus, Cenchrus, Chloris, Cyperus, Dactyloctenium, Digitaria, Echinochloa, Eleusine, Eriochloa, Leptochloa, Lolium, Panicum, Phalaris, Poa, Rottboellia, Setaria, Sorghum, Urochloa, Abutilon, Amaranthus, Ammannia, Amsinckia, Anchusa, Bacopa, Barbarea, Bassia, Brassica, Calandrinia, Capsella, Chamaesyce, Chenopodium, Cuscuta, , Erodium, Heteranthera, Ipomoea, Lactuca, Lamium, Mollugo, Persicaria, Polygonum, Pontederia, Portulaca, Richardia, Schoenoplectiella, Senecio, Sida, Sinapis, Sisymbrium, Solanum, Stellaria and Tribulus. More preferably, the undesirable vegetation is selected from the genera Cyperus, Echinochloa, Leptochloa, Ammannia, Bacopa, Heteranthera, Pontederia, and Schoenoplectiella. Even more preferably, the undesirable vegetation is selected from the genera Cyperus, Echinochloa, Leptochloa and Ammannia. In particular, the undesirable vegetation is selected from the genera Echinochloa and Leptochloa. Most preferably, the undesirable vegetation is selected from the genus Echinochloa. In another particularly preferred embodiment, the undesirable vegetation is selected from the genus Leptochloa.

In yet another preferred embodiment, the undesirable vegetation is selected from Aegilops cylindrical (AEGCY, jointed goatgrass), Avena fatua (AVEFA, wild oat), Brachiaria platyphylla (BRAPP, broadleaf signalgrass), Brachiaria texana (PANTA, Texas panicum), Bromus commutato (BROCO, hairy chess), Bromus japonicus (BROJA, Japanese brome), Bromus secalinus (BROSE, cheat), Bromus tectorum (BROTE, downy brome), Cenchrus spinifex (CCHPA, field sandbur), Chloris barbata (CHRBA, swollen fingergrass), Cyperus difformis (CYPDI, small-flower umbrella sedge), Cyperus eragrostis (CYPER, lovegrass sedge), Dactyloctenium aegyptium (DTTAE, crowfoot grass), Digitaria sanguinalis (DIGSA, large crabgrass), Echinochloa colonum (ECHCO, jungle rice), Echinochloa crus-galli (ECHCG, common barnyard grass), Echinochloa muricata (ECHPU, prickly barnyardgrass), Echinochloa muricata var. microstachya (ECHCM, rough barnyardgrass), Echinochloa oryzicola (ECHCR, late watergrass), Echinochloa oryzoides (ECHOR, early watergrass), Echinochloa walteri (ECHWA, water millet), Eleusine indica (ELEIN, goosegrass), Eriochloa villosa (ERBVI, woolly cupgrass), Leptochloa fusca subsp. uninervia (LEFUN, Mexican sprangletop), Leptochloa fusca subsp. fascicularis (LEFFA, bearded sprangletop), Lolium multiflorum (LOLMU, Italian ryegrass), Lolium rigidum (LOLRI, annual ryegrass), Panicum capillare (PANCA, witchgrass), Panicum dichotomiflorum (PANDI, fall panicum), Panicum miliaceum (PANMI, wild proso millet), Phalaris canariensis (PHACA, canarygrass), Poa annua (POAAN, annual bluegrass), Rottboellia cochinchinensis (ROOEX, itch grass), Setaria faberi (SETFA, giant foxtail), Setaria pumila (SETPU, yellow foxtail), Setaria viridis (SETVI, green foxtail), Sorghum halepense (SORHA, Johnson grass), Sorghum x drummondii (SORSU, shattercane), Urochloa fusca (PANFA, browntop panicum) and Urochloa maxima (PANMA, guineagrass), Abutilon theophrasti (ABUTH, velvet leaf), Amaranthus palmeri (AMAPA, Palmer amaranth), Amaranthus retroflexus (AMARE, pigweed), Amaranthus tuberculatus (AMATU, tall waterhemp), Ammannia auriculata (AMMAU, redstem), Ammannia coccinea (AMMCO, purple redstem), Amsinckia menziesii (ANSME, fiddleneck), Anchusa arvensis (LYCAR, small bugloss), Bacopa monnieri (BAOMO, Monnier water hyssop), Barbarea vulgaris (BARVU, bittercress), Bassia scoparia (KCHSC, kochia), Brassica nigra (BRSNI, black mustard), Calandrinia ciliata subsp. menziesii (CLNCM, redmaids rock purslane), Capsella bursa-pastoris (CAPBP, shepherd's purse), Chamaesyce maculata (EPHMA, annual spurge), Chenopodium album (CHEAL, common lambsquarters), Chenopodium leptophyllum (CHELE, slimleaf lambsquarters), Cuscuta europaea (CVCAU, large dodder), Erodium cicutarium (EROCI, redstem filaree), Heteranthera limosa (HETLI, duck salad), Ipomoea hederacea (IPOHE, morningglory), Lactuca serriola (LACSE, prickly lettuce), Lamium amplexicaule (LAMAM, henbit), Mollugo verticillata (MOLVE, carpetweed), Persicaria maculosa (POLPE, ladysthumb), Persicaria pensylvanica (POLPY, Pennsylvania smartweed), Polygonum aviculare (POLAV, prostrate knotweed), Pontederia vaginalis (MOOVA, monochoria), Portulaca oleracea (POROL, purslane), Richardia scabra (RCHSC, Florida pusley), Schoenoplectiella mucronata (SCPMU, rice-field bulrush), Senecio vulgaris (SENVU, common groundsel), Sida spinosa (SIDSP, prickly sida), Sinapis arvensis (SINAR, wild mustard), Sisymbrium irio (SSYIR, London rocket), Solanum nigrum (SOLNI, black nightshade), Stellaria media (STEME, common chickweed) and Tribulus terrestris (TRBTE, common puncturevine).

More preferably, the undesirable vegetation is selected from Cyperus difformis (CYPDI, small-flower umbrella sedge), Echinochloa colonum (ECHCO, jungle rice), Echinochloa crus-galli (ECHCG, common barnyard grass), Echinochloa muricata (ECHPU, prickly barnyardgrass), Echinochloa muricata var. microstachya (ECHCM, rough barnyardgrass), Echinochloa oryzicola (ECHCR, late watergrass), Echinochloa oryzoides (ECHOR, early watergrass), Echinochloa walteri (ECHWA, water millet), Leptochloa fusca subsp. uninervia (LEFUN, Mexican sprangletop), Leptochloa fusca subsp. fascicularis (LEFFA, bearded sprangletop), Ammannia auriculata (AMMAU, redstem), Ammannia coccinea (AMMCO, purple redstem), Bacopa monnieri (BAOMO, Monnier water hyssop), Heteranthera limosa (HETLI, duck salad), Pontederia vaginalis (MOOVA, monochoria), and Schoenoplectiella mucronata (SCPMU, rice-field bulrush).

Even more preferably, the undesirable vegetation is selected from Cyperus difformis (CYPDI, small-flower umbrella sedge), Echinochloa crus-galli (ECHCG, common barnyard grass), Echinochloa muricata (ECHPU, prickly barnyardgrass), Echinochloa oryzicola (ECHCR, late watergrass), Echinochloa oryzoides (ECHOR, early watergrass), Leptochloa fusca subsp. uninervia (LEFUN, Mexican sprangletop), Leptochloa fusca subsp. fascicularis (LEFFA, bearded sprangletop), Ammannia auriculata (AMMAU, redstem), Ammannia coccinea (AMMCO, purple redstem), Bacopa monnieri (BAOMO, Monnier water hyssop), Heteranthera limosa (HETLI, duck salad), Pontederia vaginalis (MOOVA, monochoria), and Schoenoplectiella mucronata (SCPMU, rice-field bulrush).

Still more preferably, the undesirable vegetation is selected from Cyperus difformis (CYPDI, small-flower umbrella sedge), Echinochloa crus-galli (ECHCG, common barnyard grass), Echinochloa oryzicola (ECHCR, late watergrass), Leptochloa fusca subsp. fascicularis (LEFFA, bearded sprangletop), Ammannia auriculata (AMMAU, redstem), Bacopa monnieri (BAOMO, Monnier water hyssop), Heteranthera limosa (HETLI, duck salad), Pontederia vaginalis (MOOVA, monochoria), and Schoenoplectiella mucronata (SCPMU, rice-field bulrush).

In another especially preferred embodiment, the undesirable vegetation is selected from Cyperus difformis (CYPDI, small-flower umbrella sedge), Echinochloa crus-galli (ECHCG, common barnyard grass), Echinochloa muricata (ECHPU, prickly barnyardgrass), Echinochloa oryzicola (ECHCR, late watergrass), Echinochloa oryzoides (ECHOR, early watergrass), Leptochloa fusca subsp. uninervia (LEFUN, Mexican sprangletop), Leptochloa fusca subsp. fascicularis (LEFFA, bearded sprangletop), and Ammannia coccinea (AMMCO, purple redstem), more preferably selected from Echinochloa crus-galli (ECHCG, common barnyard grass), Echinochloa muricata (ECHPU, prickly barnyardgrass), Echinochloa oryzicola (ECHCR, late watergrass), Echinochloa oryzoides (ECHOR, early watergrass), Leptochloa fusca subsp. uninervia (LEFUN, Mexican sprangletop), Leptochloa fusca subsp. fascicularis (LEFFA, bearded sprangletop), even more preferably selected from Echinochloa crus-galli (ECHCG, common barnyard grass), Echinochloa oryzicola (ECHCR, late watergrass) and Leptochloa fusca subsp. fascicularis (LEFFA, bearded sprangletop).

In another embodiment, the undesirable vegetation is a herbicide resistant or tolerant weed species.

Exemplary herbicide resistant or tolerant weed species include, but are not limited to, biotypes resistant or tolerant to herbicides selected from the group consisting of acetyl CoA carboxylase (ACCase) inhibitors (HRAC Group A), acetolactate synthase (ALS) inhibitors (HRAC Group B), photosystem II (PS II) inhibitors (HRAC Groups C1, C2 and C3), DOXP synthase inhibitors (HRAC Group F4), and very long chain fatty acid (VLCFA) inhibitors (HRAC Group K3).

This invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein pendimethalin is present in the composition in the form of microcapsules.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin being optionally diluted with water.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin or a dilute aqueous suspension obtained from diluting a capsule suspension (CS) comprising pendimethalin with water.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein pendimethalin is present in the composition in the form of microcapsules and applied at an application rate of from 1 to 5 kg ai/ha, preferably from 1 to 4 kg ai/ha, more preferably from 1 to 3 kg ai/ha and in particular from 1 to 2.5 kg ai/ha.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin being optionally diluted with water and the application rate is from 1 to 5 kg ai/ha, preferably from 1 to 4 kg ai/ha, more preferably from 1 to 3 kg ai/ha and in particular from 1 to 2.5 kg ai/ha.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin or a dilute aqueous suspension obtained from diluting a capsule suspension (CS) comprising pendimethalin with water and the application rate is from 1 to 5 kg ai/ha, preferably from 1 to 4 kg ai/ha, more preferably from 1 to 3 kg ai/ha and in particular from 1 to 2.5 kg ai/ha.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein pendimethalin is present in the composition in the form of microcapsules and is applied from 5 to 15 days, more preferably 5 to 10 days and even more preferably from 7 to 10 days after the rice seeds have been sown or after the rice plants have been transplanted.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin being optionally diluted with water and is applied from 5 to 15 days, more preferably 5 to 10 days and even more preferably from 7 to 10 days after the rice seeds have been sown or after the rice plants have been transplanted.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin or a dilute aqueous suspension obtained from diluting a capsule suspension (CS) comprising pendimethalin with water and is applied from 5 to 15 days, more preferably 5 to 10 days and even more preferably from 7 to 10 days after the rice seeds have been sown or after the rice plants have been transplanted.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein pendimethalin is present in the composition in the form of microcapsules and applied from 5 to 15 days, more preferably 5 to 10 days and even more preferably from 7 to 10 days after the rice seeds have been sown or after the rice plants have been transplanted at an application rate of from 1 to 4 kg ai/ha.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin being optionally diluted with water and applied from 5 to 15 days, more preferably 5 to 10 days and even more preferably from 7 to 10 days after the rice seeds have been sown or after the rice plants have been transplanted at an application rate of from 1 to 4 kg ai/ha.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin or a dilute aqueous suspension obtained from diluting a capsule suspension (CS) comprising pendimethalin with water and applied from 5 to 15 days, more preferably 5 to 10 days and even more preferably from 7 to 10 days after the rice seeds have been sown or after the rice plants have been transplanted at an application rate of from 1 to 4 kg ai/ha.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein pendimethalin is present in the composition in the form of microcapsules and applied from 5 to 15 days, more preferably 5 to 10 days and even more preferably from 7 to 10 days after the rice seeds have been sown or after the rice plants have been transplanted at an application rate of from 1 to 3 kg ai/ha.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin being optionally diluted with water and applied from 5 to 15 days, more preferably 5 to 10 days and even more preferably from 7 to 10 days after the rice seeds have been sown or after the rice plants have been transplanted at an application rate of from 1 to 3 kg ai/ha.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin or a dilute aqueous suspension obtained from diluting a capsule suspension (CS) comprising pendimethalin with water and applied from 5 to 15 days, more preferably 5 to 10 days and even more preferably from 7 to 10 days after the rice seeds have been sown or after the rice plants have been transplanted at an application rate of from 1 to 3 kg ai/ha.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein pendimethalin is present in the composition in the form of microcapsules and applied from 5 to 15 days, more preferably 5 to 10 days and even more preferably from 7 to 10 days after the rice seeds have been sown or after the rice plants have been transplanted at an application rate of from 1 to 2.5 kg ai/ha.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin being optionally diluted with water and applied from 5 to 15 days, more preferably 5 to 10 days and even more preferably from 7 to 10 days after the rice seeds have been sown or after the rice plants have been transplanted at an application rate of from 1 to 2.5 kg ai/ha.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin or a dilute aqueous suspension obtained from diluting a capsule suspension (CS) comprising pendimethalin with water and applied from 5 to 15 days, more preferably 5 to 10 days and even more preferably from 7 to 10 days after the rice seeds have been sown or after the rice plants have been transplanted at an application rate of from 1 to 2.5 kg ai/ha.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein pendimethalin is present in the composition in the form of microcapsules and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin being optionally diluted with water and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin or a dilute aqueous suspension obtained from diluting a capsule suspension (CS) comprising pendimethalin with water and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein pendimethalin is present in the composition in the form of microcapsules and applied at an application rate of from 1 to 5 kg ai/ha, preferably from 1 to 4 kg ai/ha, more preferably from 1 to 3 kg ai/ha and in particular from 1 to 2.5 kg ai/ha and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin being optionally diluted with water and the application rate is from 1 to 5 kg ai/ha, preferably from 1 to 4 kg ai/ha, more preferably from 1 to 3 kg ai/ha and in particular from 1 to 2.5 kg ai/ha and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin or a dilute aqueous suspension obtained from diluting a capsule suspension (CS) comprising pendimethalin with water and the application rate is from 1 to 5 kg ai/ha, preferably from 1 to 4 kg ai/ha, more preferably from 1 to 3 kg ai/ha and in particular from 1 to 2.5 kg ai/ha and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein pendimethalin is present in the composition in the form of microcapsules and is applied from 5 to 15 days, more preferably 5 to 10 days and even more preferably from 7 to 10 days after the rice seeds have been sown or after the rice plants have been transplanted and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin being optionally diluted with water and is applied from 5 to 15 days, more preferably 5 to 10 days and even more preferably from 7 to 10 days after the rice seeds have been sown or after the rice plants have been transplanted and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin or a dilute aqueous suspension obtained from diluting a capsule suspension (CS) comprising pendimethalin with water and is applied from 5 to 15 days, more preferably 5 to 10 days and even more preferably from 7 to 10 days after the rice seeds have been sown or after the rice plants have been transplanted and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein pendimethalin is present in the composition in the form of microcapsules and applied from 5 to 15 days, more preferably 5 to 10 days and even more preferably from 7 to 10 days after the rice seeds have been sown or after the rice plants have been transplanted at an application rate of from 1 to 4 kg ai/ha and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin being optionally diluted with water and applied from 5 to 15 days, more preferably 5 to 10 days and even more preferably from 7 to 10 days after the rice seeds have been sown or after the rice plants have been transplanted at an application rate of from 1 to 4 kg ai/ha and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin or a dilute aqueous suspension obtained from diluting a capsule suspension (CS) comprising pendimethalin with water and applied from 5 to 15 days, more preferably 5 to 10 days and even more preferably from 7 to 10 days after the rice seeds have been sown or after the rice plants have been transplanted at an application rate of from 1 to 4 kg ai/ha and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein pendimethalin is present in the composition in the form of microcapsules and applied from 5 to 15 days, more preferably 5 to 10 days and even more preferably from 7 to 10 days after the rice seeds have been sown or after the rice plants have been transplanted at an application rate of from 1 to 3 kg ai/ha and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin being optionally diluted with water and applied from 5 to 15 days, more preferably 5 to 10 days and even more preferably from 7 to 10 days after the rice seeds have been sown or after the rice plants have been transplanted at an application rate of from 1 to 3 kg ai/ha and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin or a dilute aqueous suspension obtained from diluting a capsule suspension (CS) comprising pendimethalin with water and applied from 5 to 15 days, more preferably 5 to 10 days and even more preferably from 7 to 10 days after the rice seeds have been sown or after the rice plants have been transplanted at an application rate of from 1 to 3 kg ai/ha and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein pendimethalin is present in the composition in the form of microcapsules and applied from 5 to 15 days, more preferably 5 to 10 days and even more preferably from 7 to 10 days after the rice seeds have been sown or after the rice plants have been transplanted at an application rate of from 1 to 2.5 kg ai/ha and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin being optionally diluted with water and applied from 5 to 15 days, more preferably 5 to 10 days and even more preferably from 7 to 10 days after the rice seeds have been sown or after the rice plants have been transplanted at an application rate of from 1 to 2.5 kg ai/ha and the undesirable vegetation is selected from the genera Echinochloa and Leptochloa.

Another preferred embodiment of this invention relates to a method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein the composition is a capsule suspension (CS) comprising pendimethalin or a dilute aqueous suspension obtained from diluting a capsule suspension (CS) comprising pendimethalin with water and applied from 5 to 15 days, more preferably 5 to 10 days and even more preferably from 7 to 10 days after the rice seeds have been sown or after the rice plants have been transplanted at an application rate of from 1 to 2.5 kg ai/ha and the undesirable vegetation is selected from the genera Echinochloa and Leptochloa.

In another embodiment, a composition comprising pendimethalin as the sole herbicidally active ingredient is applied.

In another embodiment, the method of this invention may comprise applying at least one further herbicide B (as defined herein). As used herein, the terms "at least one further herbicide B", "at least one herbicide B" or "herbicide B" exclude pendimethalin. In yet another embodiment, a herbicidally effective amount of a composition comprising pendimethalin and at least one further herbicide B (as defined hereinafter) is applied.

In a preferred embodiment, the composition comprising pendimethalin is applied in combination with at least one further herbicide B selected from the groups b1) to b15):
b1) lipid biosynthesis inhibitors;
b2) acetolactate synthase inhibitors (ALS inhibitors);
b3) photosynthesis inhibitors;
b4) protoporphyrinogen-IX oxidase inhibitors,
b5) bleacher herbicides;
b6) enolpyruvyl shikimate 3-phosphate synthase inhibitors (EPSP inhibitors);
b7) glutamine synthetase inhibitors;
b8) 7,8-dihydropteroate synthase inhibitors (DHP inhibitors);
b9) mitosis inhibitors;
b10) inhibitors of the synthesis of very long chain fatty acids (VLCFA inhibitors);
b11) cellulose biosynthesis inhibitors;
b12) decoupler herbicides;
b13) auxinic herbicides;
b14) auxin transport inhibitors; and
b15) other herbicides selected from the group consisting of bromobutide, chlorflurenol, chlorflurenol-methyl, cinmethylin, cumyluron, dalapon, dazomet, difenzoquat, difenzoquat-metilsulfate, dimethipin, DSMA, dymron, endothal and its salts, etobenzanid, flamprop, flamprop-isopropyl, flamprop-methyl, flamprop-M-isopropyl, flamprop-M-methyl, flurenol, flurenol-butyl, flurprimidol, fosamine, fosamine-ammonium, indanofan, indaziflam, maleic hydrazide, mefluidide, metam, methiozolin, methyl azide, methyl bromide, methyl-dymron, methyl iodide, MSMA, oleic acid, oxaziclomefone, pelargonic acid, pyributicarb, quinoclamine, tetflupyrolimet, triaziflam, tridiphane and 6-chloro-3-(2-cyclopropyl-6-methylphenoxy)-4-pyridazinol (CAS 499223-49-3) and its salts and esters;
and agriculturally acceptable salts or derivatives thereof.

In another embodiment, the composition comprising pendimethalin is applied in combination with at least one further herbicide B selected from lipid biosynthesis inhibitors (group b1). These are compounds that inhibit lipid biosynthesis. Inhibition of the lipid biosynthesis can be affected either through inhibition of acetylCoA carboxylase (hereinafter termed ACC herbicides) or through a different mode of action (hereinafter termed non-ACC herbicides). The ACC herbicides belong to the group A of the HRAC classification system whereas the non-ACC herbicides belong to the group N of the HRAC classification.

In another embodiment, the composition comprising pendimethalin is applied in combination with at least one further herbicide B selected from ALS inhibitors (group b2). The herbicidal activity of these compounds is based on the inhibition of acetolactate synthase and thus on the inhibition of the branched chain amino acid biosynthesis. These inhibitors belong to the group B of the HRAC classification system.

In another embodiment, the composition comprising pendimethalin is applied in combination with at least one further herbicide B selected from photosynthesis inhibitors (group b3). The herbicidal activity of these compounds is based either on the inhibition of the photosystem II in plants (so-called PSII inhibitors, groups C1, C2 and C3 of HRAC classification) or on diverting the electron transfer in photosystem I in plants (so-called PSI inhibitors, group D of HRAC classification) and thus on an inhibition of photosynthesis.

In another embodiment, the composition comprising pendimethalin is applied in combination with at least one further herbicide B selected from protoporphyrinogen-lX-oxidase inhibitors (group b4). The herbicidal activity of these compounds is based on the inhibition of the protoporphyrinogen-IX-oxidase. These inhibitors belong to the group E of the HRAC classification system.

In another embodiment, the composition comprising pendimethalin is applied in combination with at least one further herbicide B selected from bleacher herbicides (group b5). The herbicidal activity of these compounds is based on the inhibition of the carotenoid biosynthesis. These include compounds which inhibit carotenoid biosynthesis by inhibition of phytoene de-saturase (so-called PDS inhibitors, group F1 of HRAC classification), compounds that inhibit the 4-hydroxyphenylpyruvate-dioxygenase (HPPD inhibitors, group F2 of HRAC classification), compounds that inhibit DOXsynthase (group F4 of HRAC class) and compounds which inhibit carotenoid biosynthesis by an unknown mode of action (bleacher - unknown target, group F3 of HRAC classification).

In another embodiment, the composition comprising pendimethalin is applied in combination with at least one further herbicide B selected from EPSP synthase inhibitors (group b6). The herbicidal activity of these compounds is based on the inhibition of enolpyruvyl shikimate 3-phosphate synthase, and thus on the inhibition of the amino acid biosynthesis in plants. These inhibitors belong to the group G of the HRAC classification system.

In another embodiment, the composition comprising pendimethalin is applied in combination with at least one further herbicide B selected from glutamine synthetase inhibitors (group b7). The herbicidal activity of these compounds is based on the inhibition of glutamine synthetase, and thus on the inhibition of the aminoacid biosynthesis in plants. These inhibitors belong to the group H of the HRAC classification system.

In another embodiment, the composition comprising pendimethalin is applied in combination with at least one further herbicide B selected from DHP synthase inhibitors (group b8). The herbicidal activity of these compounds is based on the inhibition of 7,8-dihydropteroate synthase. These inhibitors belong to the group I of the HRAC classification system.

In another embodiment, the composition comprising pendimethalin is applied in combination with at least one further herbicide B selected from mitosis inhibitors (group b9). The herbicidal activity of these compounds is based on the disturbance or inhibition of microtubule formation or organization, and thus on the inhibition of mitosis. These inhibitors belong to the groups K1 and K2 of the HRAC classification system.

In another embodiment, the composition comprising pendimethalin is applied in combination with at least one further herbicide B selected from VLCFA inhibitors (group b10). The herbicidal activity of these compounds is based on the inhibition of the synthesis of very long chain fatty acids and thus on the disturbance or inhibition of cell division in plants. These inhibitors belong to the group K3 of the HRAC classification system.

In another embodiment, the composition comprising pendimethalin is applied in combination with at least one further herbicide B selected from cellulose biosynthesis inhibitors (group b11). The herbicidal activity of these compounds is based on the inhibition of the biosynthesis of cellulose and thus on the inhibition of the synthesis of cell walls in plants. These inhibitors belong to the group L of the HRAC classification system.

In another embodiment, the composition comprising pendimethalin is applied in combination with at least one further herbicide B selected from decoupler herbicides (group b12). The herbicidal activity of these compounds is based on the disruption of the cell membrane. These inhibitors belong to the group M of the HRAC classification system.

In another embodiment, the composition comprising pendimethalin is applied in combination with at least one further herbicide B selected from auxinic herbicides (group b13). These include compounds that mimic auxins, i.e. plant hormones, and affect the growth of the plants. These compounds belong to the group O of the HRAC classification system.

In another embodiment, the composition comprising pendimethalin is applied in combination with at least one further herbicide B selected from auxin transport inhibitors (group b14). The herbicidal activity of these compounds is based on the inhibition of the auxin transport in plants. These compounds belong to the group P of the HRAC classification system.

As to the given mechanisms of action and classification of the active substances, see e.g. "HRAC, Classification of Herbicides According to Mode of Action", http://www.plantprotection.org/hrac/MOA.html).

Examples of the at least one further herbicide B that can be applied in combination with the composition comprising pendimethalin are selected from
b1) from the group of the lipid biosynthesis inhibitors:
   ACC-herbicides such as alloxydim, alloxydim-sodium, butroxydim, clethodim, clodinafop, clodinafop-propargyl, cycloxydim, cyhalofop, cyhalofop-butyl, diclofop, diclofop-methyl, fenoxaprop, fenoxaprop-ethyl, fenoxaprop-P, fenoxaprop-P-ethyl, fluazifop, fluazifop-butyl, fluazifop-P, fluazifop-P-butyl, haloxyfop, haloxyfop-methyl, haloxyfop-P, haloxyfop-P-methyl, metamifop, pinoxaden, profoxydim, propaquizafop, quizalofop, quizalofop-ethyl, quizalofop-tefuryl, quizalofop-P, quizalofop-P-ethyl, quizalofop-P-tefuryl, sethoxydim, tepraloxydim, tralkoxydim, 4-(4'-Chloro-4-cyclopropyl-2'-fluoro[1,1'-biphenyl]-3-yl)-5-hydroxy-2,2,6,6-tetramethyl-2H-pyran-3(6H)-one (CAS 1312337-72-6); 4-(2',4'-Dichloro-4-cyclopropyl[1,1'-biphenyl]-3-yl)-5-hydroxy-2,2,6,6-tetramethyl-2H-pyran-3(6H)-one (CAS 1312337-45-3); 4-(4'-Chloro-4-ethyl-2'-fluoro[1,1'-biphenyl]-3-yl)-5-hydroxy-2,2,6,6-tetramethyl-2H-pyran-3(6H)-one (CAS 1033757-93-5); 4-(2',4'-Dichloro-4-ethyl[1,1'-biphenyl]-3-yl)-2,2,6,6-tetramethyl-2H-pyran-3,5(4H,6H)-dione (CAS 1312340-84-3); 5-(Acetyloxy)-4-(4'-chloro-4-cyclopropyl-2'-fluoro[1,1'-biphenyl]-3-yl)-3,6-dihydro-2,2,6,6-tetramethyl-2H-pyran-3-one (CAS 1312337-48-6); 5-(Acetyloxy)-4-(2',4'-dichloro-4-cyclopropyl- [1,1'-biphenyl]-3-yl)-3,6-dihydro-2,2,6,6-tetramethyl-2H-pyran-3-one; 5-(Acetyloxy)-4-(4'-chloro-4-ethyl-2'-fluoro[1,1'-biphenyl]-3-yl)-3,6-dihydro-2,2,6,6-tetramethyl-2H-pyran-3-one (CAS 1312340-82-1); 5-(Acetyloxy)-4-(2',4'-dichloro-4-ethyl[1,1'-biphenyl]-3-yl)-3,6-dihydro-2,2,6,6-tetramethyl-2H-pyran-3-one (CAS 1033760-55-2); 4-(4'-Chloro-4-cyclopropyl-2'-fluoro[1,1'-biphenyl]-3-yl)-5,6-dihydro-2,2,6,6-tetramethyl-5-oxo-2H-pyran-3-yl carbonic acid methyl ester (CAS 1312337-51-1); 4-(2',4'-Dichloro -4-cyclopropyl- [1,1'-biphenyl]-3-yl)-5,6-dihydro-2,2,6,6-tetramethyl-5-oxo-2H-pyran-3-yl carbonic acid methyl ester; 4-(4'-Chloro-4-ethyl-2'-fluoro[1,1'-biphenyl]-3-yl)-5,6-dihydro-2,2,6,6-tetramethyl-5-oxo-2H-pyran-3-yl carbonic acid methyl ester (CAS 1312340-83-2); 4-(2',4'-Dichloro-4-ethyl[1,1'-biphenyl]-3-yl)-5,6-dihydro-2,2,6,6-tetramethyl-5-oxo-2H-pyran-3-yl carbonic acid methyl ester (CAS 1033760-58-5); and non ACC herbicides such as benfuresate, butylate, cycloate, dalapon, dimepiperate, EPTC, esprocarb, ethofumesate, flupropanate, molinate, orbencarb, pebulate, prosulfocarb, TCA, thiobencarb, tiocarbazil, triallate and vernolate;
b2) from the group of the ALS inhibitors:
   sulfonylureas such as amidosulfuron, azimsulfuron, bensulfuron, bensulfuron-methyl, chlorimuron, chlorimuron-ethyl, chlorsulfuron, cinosulfuron, cyclosulfamuron, ethametsulfuron, ethametsulfuron-methyl, ethoxysulfuron, flazasulfuron, flucetosulfuron, flupyrsulfuron, flupyrsulfuron-methyl-sodium, foramsulfuron, halosulfuron, halosulfuron-methyl, imazosulfuron, iodosulfuron, iodosulfuron-methyl-sodium, iofensulfuron, iofensulfuron-sodium, mesosulfuron, metazosulfuron, metsulfuron, metsulfuron-methyl, nicosulfuron, orthosulfamuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron, triflusulfuron, triflusulfuron-methyl and tritosulfuron,
   imidazolinones such as imazamethabenz, imazamethabenz-methyl, imazamox, imazapic, imazapyr, imazaquin and imazethapyr, triazolopyrimidine herbicides and sulfonanilides such as cloransulam, cloransulam-methyl, diclosulam, flumetsulam, florasulam, metosulam, penoxsulam, pyrimisulfan and pyroxsulam,
   pyrimidinylbenzoates such as bispyribac, bispyribac-sodium, pyribenzoxim, pyriftalid, pyriminobac, pyriminobac-methyl, pyrithiobac, pyrithiobac-sodium, 4-[[[2-[(4,6-dimethoxy-2-pyrimidinyl)oxy]phenyl]methyl]amino]-benzoic acid-1-methylethyl ester (CAS 420138-41-6), 4-[[[2-[(4,6-dimethoxy-2-pyrimidinyl)oxy]phenyl]methyl]amino]-benzoic acid propyl ester (CAS 420138-40-5), N-(4-bromophenyl)-2-[(4,6-dimethoxy-2-pyrimidinyl)oxy]benzenemethanamine (CAS 420138-01-8),
   sulfonylaminocarbonyl-triazolinone herbicides such as flucarbazone, flucarbazone-sodium, propoxycarbazone, propoxycarbazone-sodium, thiencarbazone and thiencarbazone-methyl; and triafamone;
b3) from the group of the photosynthesis inhibitors:
   amicarbazone, inhibitors of the photosystem II, e.g. 1-(6-tert-butylpyrimidin-4-yl)-2-hydroxy-4-methoxy-3-methyl-2H-pyrrol-5-one (CAS 1654744-66-7), 1-(5-tert-butylisoxazol-3-yl)-2-hydroxy-4-methoxy-3-methyl-2H-pyrrol-5-one (CAS 1637455-12-9), 1-(5-tert-butylisoxazol-3-yl)-4-chloro-2-hydroxy-3-methyl-2H-pyrrol-5-one (CAS 1637453-94-1), 1-(5-tert-butyl-1-methyl-pyrazol-3-yl)-4-chloro-2-hydroxy-3-methyl-2H-pyrrol-5-one (CAS 1654057-29-0), 1-(5-tert-butyl-1-methyl-pyrazol-3-yl)-3-chloro-2-hydroxy-4-methyl-2H-pyrrol-5-one (CAS 1654747-80-4), 4-hydroxy-1-methoxy-5-methyl-3-[4-(trifluoromethyl)-2-pyridyl]imidazolidin-2-one; (CAS 2023785-78-4), 4-hydroxy-1,5-dimethyl-3-[4-(trifluoromethyl)-2-pyridyl]imidazolidin-2-one (CAS 2023785-79-5), 5-ethoxy-4-hydroxy-1-methyl-3-[4-(trifluoromethyl)-2-pyridyl]imidazolidin-2-one (CAS 1701416-69-4), 4-hydroxy-1-methyl-3-[4-(trifluoromethyl)-2-pyridyl]imidazolidin-2-one (CAS 1708087-22-2), 4-hydroxy-1,5-dimethyl-3-[1-methyl-5-(trifluoromethyl)pyrazol-3-yl]imidazolidin-2-one (CAS 2023785-80-8), 1-(5-tert-butylisoxazol-3-yl)-4-ethoxy-5-hydroxy-3-methyl-imidazolidin-2-one (CAS 1844836-64-1), triazine herbicides, including of chlorotriazine, triazinones, triazindiones, methylthiotriazines and pyridazinones such as ametryn, atrazine, chloridazone, cyanazine, desmetryn, dimethametryn,hexazinone, metribuzin, prometon, prometryn, propazine, simazine, simetryn, terbumeton, terbuthylazin, terbutryn and trietazin, aryl urea such as chlorobromuron, chlorotoluron, chloroxuron, dimefuron, diuron, fluometuron, isoproturon, isouron, linuron, metamitron, methabenzthiazuron, metobenzuron, metoxuron, monolinuron, neburon, siduron, tebuthiuron and thiadiazuron, phenyl carbamates such as desmedipham, karbutilat, phenmedipham, phenmedipham-ethyl, nitrile herbicides such as bromofenoxim, bromoxynil and its salts and esters, ioxynil and its salts and esters, uraciles such as bromacil, lenacil and terbacil, and bentazon and bentazon-sodium, pyridate, pyridafol, pentanochlor and propanil and inhibitors of the photosystem I such as diquat, diquat-dibromide, paraquat, paraquat-dichloride and paraquat-dimetilsulfate;
b4) from the group of the protoporphyrinogen-IX oxidase inhibitors:
   acifluorfen, acifluorfen-sodium, azafenidin, bencarbazone, benzfendizone, bifenox, butafenacil, carfentrazone, carfentrazone-ethyl, chlomethoxyfen, chlorphthalim, cinidon-ethyl, cyclopyranil, fluazolate, flufenpyr, flufenpyr-ethyl, flumiclorac, flumiclorac-pentyl, flumioxazin, fluoroglycofen, fluoroglycofen-ethyl, fluthiacet, fluthiacet-methyl, fomesafen, halosafen, lactofen, oxadiargyl, oxadiazon, oxyfluorfen, pentoxazone, profluazol, pyraclonil, pyraflufen, pyraflufen-ethyl, saflufenacil, sulfentrazone, thidiazimin, tiafenacil, trifludimoxazin, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6; S-3100), N-ethyl-3-(2,6-dichloro-4-trifluoromethylphenoxy)-5-methyl-1*H*-pyrazole-1-carboxamide (CAS 452098-92-9), N-tetrahydrofurfuryl-3-(2,6-dichloro-4-trifluoromethylphenoxy)-5-methyl-1*H*-pyrazole-1-carboxamide (CAS 915396-43-9), N-ethyl-3-(2-chloro-6-fluoro-4-trifluoromethylphenoxy)-5-methyl-1*H*-pyrazole-1-carboxamide (CAS 452099-05-7), N-tetrahydrofurfuryl-3-(2-chloro-6-fluoro-4-trifluoromethylphenoxy)-5-methyl-1*H*-pyrazole-1-carboxamide (CAS 452100-03-7), 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione (CAS 451484-50-7), 2-(2,2,7-trifluoro-3-oxo-4-prop-2-ynyl-3,4-dihydro-2H-benzo[1,4]oxazin-6-yl)-4,5,6,7-tetrahydro-isoindole-1,3-dione (CAS 1300118-96-0), 1-methyl-6-trifluoromethyl-3-(2,2,7-trifluoro-3-oxo-4-prop-2-ynyl-3,4-dihydro-2H-benzo[1,4]oxazin-6-yl)-1H-pyrimidine-2,4-dione (CAS 1304113-05-0), methyl (*E*)-4-[2-chloro-5-[4-chloro-5-(difluoromethoxy)-1*H*-methyl-pyrazol-3-yl]-4-fluoro-phenoxy]-3-methoxybut-2-enoate (CAS 948893-00-3), and 3-[7-chloro-5-fluoro-2-(trifluoromethyl)-1H-benzimidazol-4-yl]-1-methyl-6-(trifluoromethyl)-1H-pyrimidine-2,4-dione (CAS 212754-02-4), 2-[2-chloro-5-[3-chloro-5-(trifluoromethyl)-2-pyridinyl]-4-fluorophenoxy]-2-methoxy-acetic acid methyl ester (CAS 1970221-16-9), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-acetic acid methyl ester (CAS 2158274-96-3), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy] acetic acid ethyl ester (CAS 158274-50-9), methyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2271389-22-9), ethyl 2-[[3-[2-chloro-5-[4-(difluoromethyl)-3-methyl-5-oxo-1,2,4-triazol-1-yl]-4-fluoro-phenoxy]-2-pyridyl]oxy]acetate (CAS 2230679-62-4), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-acetic acid methyl ester (CAS 2158275-73-9), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy] acetic acid ethyl ester (CAS 2158274-56-5), 2-[2-[[3-chloro-6-[3,6-dihydro-3-methyl-2,6-dioxo-4-(trifluoromethyl)-1(2H)-pyrimidinyl]-5-fluoro-2-pyridinyl]oxy]phenoxy]-N-(methylsulfonyl)-acetamide (CAS 2158274-53-2), 2-[[3-[[3-chloro-6-[3,6-dihydro-3-methyl-2,6-dioxo-4-(trifluoromethyl)-1(2H)-pyrimidinyl]-5-fluoro-2-pyridinyl]oxy]-2-pyridinyl]oxy]-N-(methylsulfonyl)-acetamide (CAS 2158276-22-1);
b5) from the group of the bleacher herbicides:
   PDS inhibitors: beflubutamid, diflufenican, fluridone, flurochloridone, flurtamone, norflurazon, picolinafen, and 4-(3-trifluoromethylphenoxy)-2-(4-trifluoromethylphenyl)pyrimidine (CAS 180608-33-7), HPPD inhibitors: benzobicyclon, benzofenap, bicyclopyrone, clomazone, fenquinotrione, isoxaflutole, mesotrione, oxotrione (CAS 1486617-21-3), pyrasulfotole, pyrazolynate, pyrazoxyfen, sulcotrione, tefuryltrione, tembotrione, tolpyralate, topramezone , bleacher, unknown target: aclonifen, amitrole flumeturon,2-chloro-3-methylsulfanyl-N-(1-methyltetrazol-5-yl)-4-(trifluoromethyl)benzamide (CAS 1361139-71-0), bixlozone and 2-(2,5-dichlorophenyl)methyl-4,4-dimethyl-3-isoxazolidinone (CAS 81778-66-7);
b6) from the group of the EPSP synthase inhibitors:
   glyphosate, glyphosate-isopropylammonium, glyphosate-potassium and glyphosate-trimesium (sulfosate);
b7) from the group of the glutamine synthase inhibitors:
   bilanaphos (bialaphos), bilanaphos-sodium, glufosinate, glufosinate-P and glufosinate-ammonium;
b8) from the group of the DHP synthase inhibitors:
   asulam;
b9) from the group of the mitosis inhibitors:
   compounds of group K1: dinitroanilines such as benfluralin, butralin, dinitramine, ethalfluralin, fluchloralin, oryzalin, prodiamine and trifluralin, phosphoramidates such as amiprophos, amiprophos-methyl, and butamiphos, benzoic acid herbicides such as chlorthal, chlorthal-dimethyl, pyridines such as dithiopyr and thiazopyr, benzamides such as propyzamide and tebutam; compounds of group K2: carbetamide, chlorpropham, flamprop, flamprop-isopropyl, flamprop-methyl, flamprop-M-isopropyl, flamprop-M-methyl and propham;
b10) from the group of the VLCFA inhibitors:
   chloroacetamides such as acetochlor, alachlor, amidochlor, butachlor, dimethachlor, dimethenamid, dimethenamid-P, metazachlor, metolachlor, S-metolachlor, pethoxamid, pretilachlor, propachlor, propisochlor and thenylchlor, oxyacetanilides such as flufenacet and mefenacet, acetanilides such as diphenamid, naproanilide, napropamide and napropamide-M, tetrazolinones such fentrazamide, and other herbicides such as anilofos, cafenstrole, fenoxasulfone, ipfencarbazone, piperophos, pyroxasulfone and isoxazoline compounds of the formulae II.1, II.2, II.3, II.4, II.5, II.6, II.7, II.8 and II.9 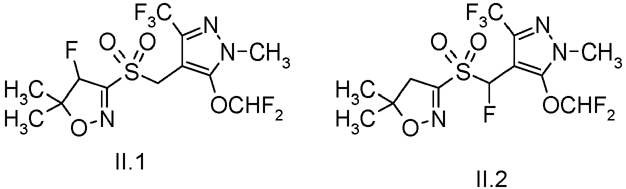 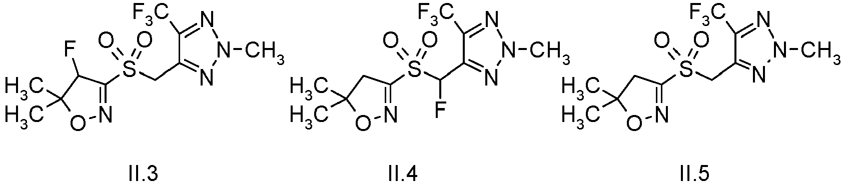 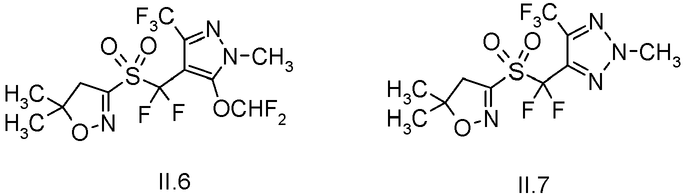 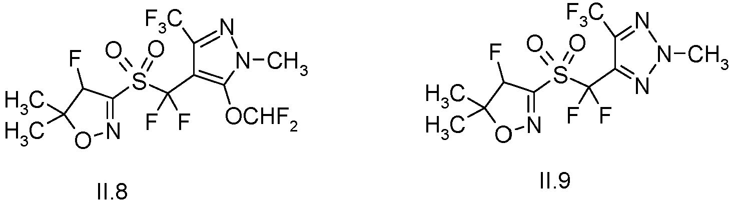 the isoxazoline compounds of the formula (II) are known in the art, e.g. from WO 2006/024820, WO 2006/037945, WO 2007/071900 and WO 2007/096576;
b11) from the group of the cellulose biosynthesis inhibitors:
   chlorthiamid, dichlobenil, flupoxam, indaziflam, isoxaben, triaziflam and 1-cyclohexyl-5-pentafluorphenyloxy-1⁴-[1,2,4,6]thiatriazin-3-ylamine (CAS 175899-01-1);
b12) from the group of the decoupler herbicides:
   dinoseb, dinoterb and DNOC and its salts;
b13) from the group of the auxinic herbicides:
   2,4-D and its salts and esters such as clacyfos, 2,4-DB and its salts and esters, aminocyclopyrachlor and its salts and esters, aminopyralid and its salts such as aminopyralid-dimethylammonium, aminopyralid-tris(2-hydroxypropyl)ammonium and its esters, benazolin, benazolin-ethyl, chloramben and its salts and esters, clomeprop, clopyralid and its salts and esters, dicamba and its salts and esters, dichlorprop and its salts and esters, dichlorprop-P and its salts and esters, flopyrauxifen, fluroxypyr, fluroxypyr-butometyl, fluroxypyr-meptyl, halauxifen and its salts and esters (CAS 943832-60-8); MCPA and its salts and esters, MCPA-thioethyl, MCPB and its salts and esters, mecoprop and its salts and esters, mecoprop-P and its salts and esters, picloram and its salts and esters, quinclorac, quinmerac, TBA (2,3,6) and its salts and esters, triclopyr and its salts and esters, florpyrauxifen, florpyrauxifen-benzyl (CAS 1390661-72-9) and 4-amino-3-chloro-5-fluoro-6-(7-fluoro-1H-indol-6-yl)picolinic acid (CAS 1629965-65-6);
b14) from the group of the auxin transport inhibitors: diflufenzopyr, diflufenzopyr-sodium, naptalam and naptalam-sodium;
b15) from the group of the other herbicides: bromobutide, chlorflurenol, chlorflurenol-methyl, cinmethylin, cumyluron, cyclopyrimorate (CAS 499223-49-3) and its salts and esters, dalapon, dazomet, difenzoquat, difenzoquat-metilsulfate, dimethipin, DSMA, dymron, endothal and its salts, etobenzanid, flurenol, flurenol-butyl, flurprimidol, fosamine, fosamine-ammonium, indanofan, maleic hydrazide, mefluidide, metam, methiozolin, methyl azide, methyl bromide, methyl-dymron, methyl iodide, MSMA, oleic acid, oxaziclomefone, pelargonic acid, pyributicarb, quinoclamine, tetflupyrolimet and tridiphane.

In another embodiment, the method of this invention may further comprise applying at least one safener C (as defined herein). In yet another embodiment, the method of this invention may further comprise applying at least one further herbicide B (as defined herein) and at least one safener C (as defined herein). In yet another embodiment, a herbicidally effective amount of a composition comprising pendimethalin and least one safener C (as defined herein) is applied. In still another embodiment, a herbicidally effective amount of a composition comprising pendimethalin, at least one further herbicide B (as defined herein) and at least one safener C (as defined herein) is applied.

Safeners are chemical compounds which prevent or reduce damage on useful plants without having a major impact on the herbicidal action of the herbicidal active components of the present compositions towards unwanted plants. They can be applied either before sowings (e.g. on seed treatments, shoots or seedlings) or in the pre-emergence application or post-emergence application of the useful plant. The safeners C and pendimethalin and optionally the herbicides B can be applied simultaneously or in succession.

Suitable safeners are e.g. (quinolin-8-oxy)acetic acids, 1-phenyl-5-haloalkyl-1H-1,2,4-triazol-3-carboxylic acids, 1-phenyl-4,5-dihydro-5-alkyl-1H-pyrazol-3,5-dicarboxylic acids, 4,5-dihydro-5,5-diaryl-3-isoxazol carboxylic acids, dichloroacetamides, alpha-oximinophenylacetonitriles, acetophenonoximes, 4,6-dihalo-2-phenylpyrimidines, N-[[4-(aminocarbonyl)phenyl]sulfonyl]-2-benzoic amides, 1,8-naphthalic anhydride, 2-halo-4-(haloalkyl)-5-thiazol carboxylic acids, phosphorthiolates and N-alkyl-O-phenylcarbamates and their agriculturally acceptable salts and their agriculturally acceptable derivatives such amides, esters, and thioesters, provided they have an acid group.

Examples of preferred safeners C are benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthaleneacetic acid (NAA), naphthalic anhydride (NA), oxabetrinil, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4), metcamifen, 4-bromophenyl chloromethyl sulfone (BPCMS, CAS 54091-06-4) and agriculturally acceptable salts or derivatives thereof.

Especially preferred safeners C are benoxacor, cloquintocet, cyprosulfamide, dichlormid, fenchlorazole, fenclorim, flurazole, fluxofenim, furilazole, isoxadifen, mefenpyr, naphthalic anhydride (NAA), oxabetrinil, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and metcamifen.

Particularly preferred safeners C are benoxacor, cloquintocet, cyprosulfamide, dichlormid, fenchlorazole, fenclorim, furilazole, isoxadifen, mefenpyr, naphtalic anhydride, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4) and metcamifen.

The herbicides B of groups b1) to b15) and the safeners C are known herbicides and safeners, see, for example, The Compendium of Pesticide Common Names (http://www.alanwood.net/pesticides/); Farm Chemicals Handbook 2000 volume 86, Meister Publishing Company, 2000; B. Hock, C. Fedtke, R. R. Schmidt, Herbizide [Herbicides], Georg Thieme Verlag, Stuttgart 1995; W. H. Ahrens, Herbicide Handbook, 7th edition, Weed Science Society of America, 1994; and K. K. Hatzios, Herbicide Handbook, Supplement for the 7th edition, Weed Science Society of America, 1998. 2,2,5-Trimethyl-3-(dichloroacetyl)-1,3-oxazolidine [CAS No. 52836-31-4] is also referred to as R-29148. 4-(Dichloroacetyl)-1-oxa-4-azaspiro[4.5]decane [CAS No. 71526-07-3] is also referred to as AD-67 and MON 4660.

The assignment of the active compounds to the respective mechanisms of action is based on current knowledge. If several mechanisms of action apply to one active compound, this substance was only assigned to one mechanism of action.

If the herbicides B and/or the safeners C as described herein are capable of forming geometrical isomers, for example E/Z isomers, it is possible to use both, the pure isomers and mixtures thereof, in the method according to the invention.

If the herbicides B and/or the safeners C as described herein have one or more centers of chirality and, as a consequence, are present as enantiomers or diastereomers, it is possible to use both, the pure enantiomers and diastereomers and their mixtures, in the method according to the invention.

If the herbicides B and/or the safeners C as described herein have ionizable functional groups, they can also be employed in the form of their agriculturally acceptable salts. Suitable are, in general, the salts of those cations and the acid addition salts of those acids whose cations and anions, respectively, have no adverse effect on the activity of the active compounds.

Preferred cations are the ions of the alkali metals, preferably of lithium, sodium and potassium, of the alkaline earth metals, preferably of calcium and magnesium, and of the transition metals, preferably of manganese, copper, zinc and iron, further ammonium and substituted ammonium in which one to four hydrogen atoms are replaced by C₁-C₄-alkyl, hydroxy-C₁-C₄-alkyl, C₁-C₄-alkoxy-C₁-C₄-alkyl, hydroxy-C₁-C₄-alkoxy-C₁-C₄-alkyl, phenyl or benzyl, preferably ammonium, methylammonium, isopropylammonium, dimethylammonium, diethylammonium, diisopropylammonium, trimethylammonium, triethylammonium, tris(isopropyl)ammonium, heptylammonium, dodecylammonium, tetradecylammonium, tetramethylammonium, tetraethylammonium, tetrabutylammonium, 2-hydroxyethylammonium (olamine salt), 2-(2-hydroxyeth-1-oxy)eth-1-ylammonium (diglycolamine salt), di(2-hydroxyeth-1-yl)ammonium (diolamine salt), tris(2-hydroxyethyl)ammonium (trolamine salt), tris(2-hydroxypropyl)ammonium, benzyltrimethylammonium, benzyltriethylammonium, N,N,N-trimethylethanolammonium (choline salt), furthermore phosphonium ions, sulfonium ions, preferably tri(C₁-C₄-alkyl)sulfonium, such as trimethylsulfonium, and sulfoxonium ions, preferably tri(C₁-C₄-alkyl)sulfoxonium, and finally the salts of polybasic amines such as N,N-bis-(3-aminopropyl)methylamine and diethylenetriamine.

Anions of useful acid addition salts are primarily chloride, bromide, fluoride, iodide, hydrogensulfate, methylsulfate, sulfate, dihydrogenphosphate, hydrogenphosphate, nitrate, bicarbonate, carbonate, hexafluorosilicate, hexafluorophosphate, benzoate and also the anions of C₁-C₄-alkanoic acids, preferably formate, acetate, propionate and butyrate.

Herbicides B and/or safeners C as described herein having a carboxyl group can be employed in the form of the acid, in the form of an agriculturally suitable salt as mentioned above or else in the form of an agriculturally acceptable derivative, for example as amides, such as mono- and di-C₁-C₆-alkylamides or arylamides, as esters, for example as allyl esters, propargyl esters, C₁-C₁₀-alkyl esters, alkoxyalkyl esters, tefuryl ((tetrahydrofuran-2-yl)methyl) esters and also as thioesters, for example as C₁-C₁₀-alkylthio esters. Preferred mono- and di-C₁-C₆-alkylamides are the methyl and the dimethylamides. Preferred arylamides are, for example, the anilides and the 2-chloroanilides. Preferred alkyl esters are, for example, the methyl, ethyl, propyl, isopropyl, butyl, isobutyl, pentyl, mexyl (1-methylhexyl), meptyl (1-methylheptyl), heptyl, octyl or isooctyl (2-ethylhexyl) esters. Preferred C₁-C₄-alkoxy-C₁-C₄-alkyl esters are the straight-chain or branched C₁-C₄-alkoxy ethyl esters, for example the 2-methoxyethyl, 2-ethoxyethyl, 2-butoxyethyl (butotyl), 2-butoxypropyl or 3-butoxypropyl ester. An example of a straight-chain or branched C₁-C₁₀-alkylthio ester is the ethylthio ester.

In the case of dicamba, suitable salts include those, where the counterion is an agriculturally acceptable cation. For example, suitable salts of dicamba are dicamba-sodium, dicamba-potassium, dicamba-methylammonium, dicamba-dimethylammonium, dicamba-isopropylammonium, dicamba-diglycolamine, dicamba-olamine, dicamba-diolamine, dicamba-trolamine, dicamba-N,N-bis-(3-aminopropyl)methylamine and dicamba-diethylenetriamine. Examples of a suitable ester are dicamba-methyl and dicamba-butotyl.

Suitable salts of 2,4-D are 2,4-D-ammonium, 2,4-D-dimethylammonium, 2,4-D-diethylammonium, 2,4-D-diethanolammonium (2,4-D-diolamine), 2,4-D-triethanolammonium, 2,4-D-isopropylammonium, 2,4-D-triisopropanolammonium, 2,4-D-heptylammonium, 2,4-D-dodecylammonium, 2,4-D-tetradecylammonium, 2,4-D-triethylammonium, 2,4-D-tris(2-hydroxypropyl)ammonium, 2,4-D-tris(isopropyl)ammonium, 2,4-D-trolamine, 2,4-D-lithium, 2,4-D-sodium and 2,4-D-N,N,N-trimethylethanolammonium (2,4-D choline). Examples of suitable esters of 2,4-D are 2,4-D-butotyl, 2,4-D-2-butoxypropyl, 2,4-D-3-butoxypropyl, 2,4-D-butyl, 2,4-D-ethyl, 2,4-D-ethylhexyl, 2,4-D-isobutyl, 2,4-D-isooctyl, 2,4-D-isopropyl, 2,4-D-meptyl, 2,4-D-methyl, 2,4-D-octyl, 2,4-D-pentyl, 2,4-D-propyl, 2,4-D-tefuryl and clacyfos.

Suitable salts of 2,4-DB are for example 2,4-DB-sodium, 2,4-DB-potassium and 2,4-DB-dimethylammonium. Suitable esters of 2,4-DB are for example 2,4-DB-butyl and 2,4-DB-isoctyl. Suitable salts of dichlorprop are for example dichlorprop-sodium, dichlorprop-potassium and dichlorprop-dimethylammonium. Examples of suitable esters of dichlorprop are dichlorprop-butotyl and dichlorprop-isoctyl.

Suitable salts and esters of MCPA include MCPA-butotyl, MCPA-butyl, MCPA-dimethylammonium, MCPA-diolamine, MCPA-ethyl, MCPA-thioethyl, MCPA-2-ethylhexyl, MCPA-isobutyl, MCPA-isoctyl, MCPA-isopropyl, MCPA-isopropylammonium, MCPA-methyl, MCPA-olamine, MCPA-potassium, MCPA-sodium and MCPA-trolamine.

A suitable salt of MCPB is MCPB sodium. A suitable ester of MCPB is MCPB-ethyl. Suitable salts of clopyralid are clopyralid-potassium, clopyralid-olamine and clopyralid-tris-(2-hydroxypropyl)ammonium. Example of suitable esters of clopyralid is clopyralid-methyl. Examples of a suitable ester of fluroxypyr are fluroxypyr-meptyl and fluroxypyr-2-butoxy-1-methylethyl, wherein fluroxypyr-meptyl is preferred.

Suitable salts of picloram are picloram-dimethylammonium, picloram-potassium, picloramtriisopropanolammonium, picloram-triisopropylammonium and picloram-trolamine. A suitable ester of picloram is picloram-isoctyl.

A suitable salt of triclopyr is triclopyr-triethylammonium. Suitable esters of triclopyr are for example triclopyr-ethyl and triclopyr-butotyl.

Suitable salts and esters of chloramben include chloramben-ammonium, chloramben-diolamine, chloramben-methyl, chloramben-methylammonium and chloramben-sodium. Suitable salts and esters of 2,3,6-TBA include 2,3,6-TBA-dimethylammonium, 2,3,6-TBA-lithium, 2,3,6-TBA-potassium and 2,3,6-TBA-sodium.

Suitable salts and esters of aminopyralid include aminopyralid-potassium, aminopyraliddimethylammonium, and aminopyralid-tris(2-hydroxypropyl)ammonium.

Suitable salts of glyphosate are for example glyphosate-ammonium, glyphosate-diammonium, glyphoste-dimethylammonium, glyphosate-isopropylammonium, glyphosate-potassium, glyphosate-sodium, glyphosate-trimesium as well as the ethanolamine and diethanolamine salts, preferably glyphosate-diammonium, glyphosate-isopropylammonium and glyphosate-trimesium (sulfosate).

A suitable salt of glufosinate is for example glufosinate-ammonium.

A suitable salt of glufosinate-P is for example glufosinate-P-ammonium.

Suitable salts and esters of bromoxynil are for example bromoxynil-butyrate, bromoxynilheptanoate, bromoxynil-octanoate, bromoxynil-potassium and bromoxynil-sodium.

Suitable salts and esters of ioxonil are for example ioxonil-octanoate, ioxonil-potassium and ioxonil-sodium.

Suitable salts and esters of mecoprop include mecoprop-butotyl, mecoprop-dimethylammonium, mecoprop-diolamine, mecoprop-ethadyl, mecoprop-2-ethylhexyl, mecoprop-isoctyl, mecopropmethyl, mecoprop-potassium, mecoprop-sodium and mecoprop-trolamine.

Suitable salts of mecoprop-P are for example mecoprop-P-butotyl, mecoprop-P-dimethylammonium, mecoprop-P-2-ethylhexyl, mecoprop-P-isobutyl, mecoprop-P-potassium and mecoprop-P-sodium.

A suitable salt of diflufenzopyr is for example diflufenzopyr-sodium.

A suitable salt of naptalam is for example naptalam-sodium.

Suitable salts and esters of aminocyclopyrachlor are for example aminocyclopyrachlordimethylammonium, aminocyclopyrachlor-methyl, aminocyclopyrachlortriisopropanolammonium, aminocyclopyrachlor-sodium and aminocyclopyrachlor-potassium.

A suitable salt of quinclorac is for example quinclorac-dimethylammonium.

A suitable salt of quinmerac is for example quinmerac-dimethylammonium.

A suitable salt of imazamox is for example imazamox-ammonium.

Suitable salts of imazapic are for example imazapic-ammonium and imazapicisopropylammonium.

Suitable salts of imazapyr are for example imazapyr-ammonium and imazapyrisopropylammonium.

A suitable salt of imazaquin is for example imazaquin-ammonium.

Suitable salts of imazethapyr are for example imazethapyr-ammonium and imazethapyrisopropylammonium.

A suitable salt of topramezone is for example topramezone-sodium.

In the method of this invention, the weight ratio of pendimethalin to herbicide B is generally in the range of from 1:1000 to 1000:1, preferably in the range of from 1:500 to 500:1, in particular in the range of from 1:250 to 250:1 and particularly preferably in the range of from 1:75 to 75:1, wherein each herbicide B being an ester or a salt of an acid is calculated as the acid.

In the method of this invention, the weight ratio of pendimethalin to safener C is generally in the range of from 1:1000 to 1000:1, preferably in the range of from 1:500 to 500:1, in particular in the range of from 1:250 to 250:1 and particularly preferably in the range of from 1:75 to 75:1, wherein each safener C being an ester or a salt of an acid is calculated as the acid.

In the method of this invention, the weight ratio of herbicide B to safener C is generally in the range of from 1:1000 to 1000:1, preferably in the range of from 1:500 to 500:1, in particular in the range of from 1:250 to 250:1 and particularly preferably in the range of from 1:75 to 75:1, wherein each herbicide B and safener C being an ester or a salt of an acid is calculated as the acid.

In the method of this invention, the weight ratio of the combination of pendimethalin and the herbicide B to the safener C is preferably in the range of from 1:500 to 500:1, in particular in the range of from 1:250 to 250:1 and particularly preferably in the range of from 1:75 to 75:1, wherein each herbicide B and safener C being an ester or a salt of an acid is calculated as the acid.

In the method of this invention, the application rate of the herbicide B (in case of salts calculated as the acid) is generally from 0.0005 kg/ha to 10 kg/ha, preferably from 0.005 kg/ha to 5 kg/ha and more preferably from 0.001 kg/ha to 2 kg/ha.

In the method of this invention, the application rate of the safener C (in case of salts calculated as the acid) is generally from 0.0005 kg/ha to 2.5 kg/ha, preferably from 0.005 kg/ha to 2 kg/ha and more preferably from 0.01 kg/ha to 1.5 kg/ha.

In the method of the invention, pendimethalin and, if present, the herbicide B and/or the safener C can be applied jointly or separately.

In the method of the invention, pendimethalin and, if present, the herbicide B and/or the safener C can be applied simultaneously or in succession.

Preferably, pendimethalin and, if present, the herbicide B and/or the safener C are applied simultaneously to the undesirable vegetation. In another embodiment, pendimethalin and, if present, the herbicide B and/or the safener C are provided as herbicidal composition as defined herein (e.g. a tank mixture containing pendimethalin and, if present, the herbicide B and/or the safener C) being applied to aquatic environment.

In case of separate or successive application, the order of the application of pendimethalin and, if present, the herbicide B and/or the safener C is of minor importance. It is only necessary that pendimethalin and, if present, the herbicide B and/or the safener C are applied in a time frame that allows simultaneous action of the active ingredients on the undesirable vegetation to be controlled and/or safened, preferably within a time frame of at most 14 days, in particular at most 7 days.

The following examples serve to illustrate the invention.

### Examples

Pendimethalin formulations as detailed below were examined at various rates and timings for weed control, crop injury and rice grain yield on a water-seeded rice system. The following experiments were conducted at the Rice Experiment Station in Biggs, California, USA in a silty clay soil. They were conducted as a randomized complete block design with three replications. The plot size was 10 feet (3.048 m) by 20 feet (6.096 m) with individual levees around each plot to prevent contamination of herbicide from plot to plot. The pendimethalin formulations chosen were all commercial products available from BASF Corporation, i.e. Prowl^{®}H2O, a capsule suspension (CS) with an active ingredient concentration of 455 g/L, Prowl^{®} 3.3, an emulsifiable concentrate (EC) with an active ingredient concentration of 396 g/L and Pendulum^{®} 2G, a granular (GR) containing 2% active ingredient. Each formulation was applied at 1, 2, and 3 lbs ai/A (1.12, 2.24 and 3.36 kg/ha) at 5, 10, or 15 days after seeding (DAS).

M-206 rice was seeded at a rate of 120 lbs/A (134.5 kg/ha) on May 23, 2020 by airplane. This seeding rate which is below the normal rate at the grower fields (170-200 Ib/A equivalent to 190.54-224.17 kg/ha) was used to allow more weed infestation in the field. The water was brought in the field a day before seeding and kept at a water depth of 4 inch (10.16 cm) throughout the growing season and only brought down later in the season for spraying additional herbicides. The water was shut off a month before harvesting. Additional herbicides (i.e. the combination penoxsulam + triclopyr) having no or limited activity on grasses, especially when applied at early tillering, were applied to all plots except the untreated for control of sedges and broadleaf weeds that were not controlled by pendimethalin. These were applied at 21 DAS, 40 DAS and 52 DAS respectively.

The CS and EC formulations were applied at 20 gallons/A (187.08 I/ha) with a 10 feet (3.048 m) two-man boom sprayer with a CO2 backpack at 30 psi (2.07 bar) with flat-fan 8003 nozzles at 3 miles per hour (4.83 km/h) sprayed into the water. The GR formulation was spread by hand in each respective plot. The additional herbicides were also applied with the spray boom.

Visual percent ratings for rice injury was collected as chlorosis, stunting, bleaching and stand reduction at 40 days after treatment (DAT). Rice stand and tiller count per square feet (0.0929 m²) was collected 75 DAS. Plant height was recorded at 108 DAS. Visual percent ratings for weed control was recorded at 56 DAT for individual weeds present which included, inter alia, *Echinochloa* spp., e.g. Echinochloa crus-galli (ECHCG, common barnyard grass) and Echinochloa oryzicola (ECHCR, late watergrass), and *Leptochloa fusca,* e.g. Leptochloa fusca subsp. fascicularis (LEFFA, bearded sprangletop), as the most important weeds. The untreated plots were used as the base or zero for visual percent ratings for both rice injury and weed control. Yield was determined at 14% moisture. An area of 21 square feet (1.951 m²) of rice was cut from the center of each plot and then to separate the seed from the stalk a thresher was used. The seeds were cleaned and the moisture was obtained and then weighed to determine yield. Data was analyzed with analyses of variance (ANOVA) and least significance difference (LSD) test (significance level p=0.05) using ARM software (GDM Solutions, Inc. 2020).

**Table 1: Weed control ratings at 56 DAT for two major grass weeds, 40 DAT stand reduction ratings and rice grain yield by treatment with the pendimethalin formulations Prowl^{®}H2O (= CS formulation, "CS"), Prowl^{®} 3.3 (= EC formulation, "EC")* and Pendulum^{®} 2G (= GR formulation, "GR")* at three different rates and timings**

| Treatment | Rate (lb ai/A) (kg ai/ha) * | Timing | *Echinochloa* spp. % control | *Leptochloa fusca* % control | % Stand Reduction | Yield (lbs/A) (kg/ha) * |
|---|---|---|---|---|---|---|
| | | | 56 DAT | 56 DAT | 40 DAT | |
| Untreated | - | - | 0 | 0 | - | 0 |
| CS | 1 1.12* | 5 DAS | 82 | 82 | 15 | 3022 3387.21* |
| CS | 1 1.12* | 10 DAS | 82 | 77 | 15 | 3858 4324.24* |
| CS | 1 1.12* | 15 DAS | 75 | 82 | 18 | 2982 3342.38* |
| CS | 2 2.24* | 5 DAS | 68 | 80 | 77 | 671 752.09* |
| CS | 2 2.24* | 10 DAS | 68 | 75 | 81 | 573 642.25* |
| CS | 2 2.24* | 15 DAS | 68 | 87 | 48 | 589 660.18* |
| CS | 3 3.36* | 5 DAS | 75 | 70 | 75 | 550 616.47* |
| CS | 3 3.36* | 10 DAS | 58 | 77 | 75 | 129 144.59* |
| CS | 3 3.36* | 15 DAS | 78 | 85 | 28 | 1835 2056.76* |
| EC* | 1 1.12* | 5 DAS | 63 | 83 | 92 | 0 0* |
| EC* | 1 1.12* | 10 DAS | 63 | 77 | 83 | 253 283.58* |
| EC* | 1 1.12* | 15 DAS | 76 | 78 | 40 | 1496 1676.79* |
| EC* | 2 2.24* | 5 DAS | 87 | 80 | 95 | 0 0* |
| EC* | 2 2.24* | 10 DAS | 78 | 80 | 89 | 436 488.69* |
| EC* | 2 2.24* | 15 DAS | 70 | 87 | 77 | 550 616.47* |
| EC* | 3 3.36* | 5 DAS | 93 | 95 | 95 | 0 0* |
| EC* | 3 3.36* | 10 DAS | 90 | 80 | 87 | 133 149.07* |
| EC* | 3 3.36* | 15 DAS | 83 | 80 | 77 | 1406 1575.92* |
| GR* | 1 1.12* | 5 DAS | 80 | 83 | 28 | 2831 3173.13* |
| GR* | 1 1.12* | 10 DAS | 77 | 85 | 33 | 2487 2787.56* |
| GR* | 1 1.12* | 15 DAS | 73 | 77 | 27 | 2633 2951.2* |
| GR* | 2 2.24* | 5 DAS | 68 | 77 | 73 | 414 464.03* |
| GR* | 2 2.24* | 10 DAS | 73 | 87 | 37 | 1297 1453.74* |
| GR* | 2 2.24* | 15 DAS | 75 | 82 | 50 | 2382 2669.87* |
| GR* | 3 3.36* | 5 DAS | 73 | 73 | 75 | 913 1023.34* |
| GR* | 3 3.36* | 10 DAS | 65 | 80 | 57 | 647 725.19* |
| GR* | 3 3.36* | 15 DAS | 70 | 85 | 52 | 1573 1763.1* |
| LSD p=0.05 | | | 17 | 12 | 28 | 1369 1534.45* |

| | | | | | | |
|---|---|---|---|---|---|---|
| *not according to the claimed invention | | | | | | |

Very minimal chlorosis and bleaching on the rice was observed (data not shown in the Table 1 above). Some stunting was observed up to 40% early in the season but for the rice that survived there was no significant difference in plant height later in the season (data not shown in the Table 1 above). The majority of rice injury was from stand reduction ranging from 15 up to 95% reduction.

As can be seen from the Table 1 above, Prowl^{®}H2O (CS) and Pendulum^{®} 2G (GR) resulted in 15-81% and 27-75% stand reduction at 40 DAT respectively whereas Prowl^{®} 3.3 (EC) had the greatest injury with up to 95% stand reduction at 40 DAT. In particular, lower stand reduction injury in the range of 15 to 18% was observed for Prowl^{®}H2O (CS) at 1 lb ai/A (1.12 kg/ha). All treatments resulted with a significant yield compared to the untreated plot except all Prowl^{®} 3.3 (EC) treatments at 5 DAS. The untreated experiment resulted in a zero yield because there was a heavy *Echinochloa* infestation that came early in the field this year. On average 21 *Echinochloa* were counted per square foot (0.0929 m²) and 2 rice per square foot (0.0929 m²) in the untreated (data not shown). This also may account for some rice stand reduction in the plots by competitive suppression. This along with a low seeding rate contributed to the lower rice counts and lower yields in the given year. A low seeding rate was used to allow for more weeds to be present in the field. On average the treatments at a rate of 1 lb ai/A (1.12 kg/ha) produced higher yields in all formulations compared with the higher rates 2 lb ai/A (2.24 kg/ha) and 3 lb ai/A (3.36 kg/ha). The highest rate of 3 lbs ai/A (3.36 kg/ha) of all formulations resulted in greater rice injury and only at the latest application timing (15 DAT) was a more acceptable yield obtained. Prowl^{®}H2O (CS) produced 60% higher yield than Pendulum^{®} 2G (GR) and 93% higher yield than Prowl^{®} 3.3 (EC) at 1lb ai/A at 10 DAS. Pendulum^{®} 2G (GR) at 2 lbs ai/A (2.24 kg/ha) at 15 DAS on average resulted in an 80% higher yield than Prowl^{®}H2O (CS) and 81% higher than Prowl^{®} 3.3 (EC). Treatment with Prowl^{®} 3.3 (EC) only achieved better yields at a later application timing (15 DAT).

The *Echinochloa* weed control at 56 DAT on average resulted in the range of 58-82% control for Prowl^{®}H2O (CS), 63-93% control for Prowl^{®} 3.3 (EC)and 65-80% control for Pendulum^{®} 2G (GR). The highest rate in Prowl^{®} 3.3 (EC) gave the greatest weed control of all, but it came with the disadvantage of also greatly injuring the rice. The highest rate for Prowl^{®}H2O (CS) and Pendulum^{®} 2G (GR) did not give significantly higher weed control and were similar to the lower rates. Even with a great *Echinochloa* infestation, acceptable weed control was achieved. There was lower *Leptochloa fusca* pressure in the field. The *Leptochloa fusca* weed control at 56 DAT on average resulted in the range of 70-85% control for Prowl^{®}H2O (CS), 77-95% control for Prowl^{®} 3.3 (EC) and 73-85% control for Pendulum^{®} 2G (GR). Acceptable weed control for *Leptochloa fusca* was also achieved. All other weeds present in the plots were controlled from 75 up to 100% accordingly after the additional herbicides were sprayed (data not shown).

In summary, Pendimethalin surprisingly demonstrated to be a useful tool for weed control in water-seeded rice systems. Among the formulations tested, Prowl^{®}H2O (CS) and Pendulum^{®} 2G (GR) proved to be more suitable for water-seeded rice than Prowl^{®} 3.3 (EC). In this regard, Prowl^{®}H2O (CS) and Pendulum^{®} 2G (GR) produced acceptable yields and low rice injury at the low rate. Pendulum^{®} 2G (GR) also produced acceptable yields at the second rate at later applications. Both of these formulations also achieved acceptable weed control for the target weeds.

## Claims

1. A method for controlling undesirable vegetation in an aquatic environment in which a rice plant is growing, said method comprising applying to the aquatic environment a herbicidally effective amount of a composition comprising pendimethalin before emergence of the undesirable vegetation and after germination of the rice seedlings wherein pendimethalin is present in the composition in the form of microcapsules.

2. The method according to claim 1 wherein the composition comprising pendimethalin is applied into the water or onto the water surface of the aquatic environment.

3. The method according to claim 1 or 2 wherein the aquatic environment is a flooded rice field, a flooded rice paddy, a pond or a lake.

4. The method according to any one of claims 1 to 3 wherein the composition is a capsule suspension (CS) comprising pendimethalin or a dilute aqueous suspension obtained from diluting the capsule suspension (CS) with water.

5. The method according to claim 4 wherein the D₅₀ of the capsules in the capsule suspension (CS) or the dilute aqueous suspension is in the range of from 1 to 100 µm.

6. The method according to any one of claims 1 to 5 wherein the rice plant is selected from flooded dry-seeded, drill-seeded, wet-seeded, water-seeded and transplanted rice.

7. The method according to any one of claims 1 to 6 wherein the composition comprising pendimethalin is applied from the 2-leaf to the 6-leaf growth stage of the rice seedlings (BBCH Code 12 to 16).

8. The method according to any one of claims 1 to 7 wherein the composition comprising pendimethalin is applied at rates of 0.1 to 10 kilograms of active ingredient per hectare (kg ai/ha), more preferably 1 to 5 kg ai/ha, even more preferably from 1 to 4 kg ai/ha, yet more preferably from 1 to 3 kg ai/ha and in particular from 1 to 2.5 kg ai/ha.

9. The method according to any one of claims 1 to 8 wherein the composition comprising pendimethalin is applied from 5 to 15 days, more preferably 5 to 10 days and even more preferably from 7 to 10 days after the rice seeds have been sown or after the rice plants have been transplanted.

10. The method according to any one of claims 1 to 9 wherein the undesirable vegetation comprises a herbicide resistant or tolerant weed species.

11. The method according to claim 10 wherein the herbicide resistant or tolerant weed species is a biotype with resistance or tolerance to at least one herbicide selected from the group consisting of acetyl CoA carboxylase (ACCase) inhibitors (HRAC Group A), acetolactate synthase (ALS) inhibitors (HRAC Group B), photosystem II (PS II) inhibitors (HRAC Groups C1, C2 and C3), DOXP synthase inhibitors (HRAC Group F4), and very long chain fatty acid (VLCFA) inhibitors (HRAC Group K3).

12. The method according to any one of claims 1 to 11 wherein the undesirable vegetation is selected from the genera Aegilops, Avena, Brachiaria, Bromus, Cenchrus, Chloris, Cyperus, Dactyloctenium, Digitaria, Echinochloa, Eleusine, Eriochloa, Leptochloa, Lolium, Panicum, Phalaris, Poa, Rottboellia, Setaria, Sorghum, Urochloa, Abutilon, Amaranthus, Ammannia, Amsinckia, Anchusa, Bacopa, Barbarea, Bassia, Brassica, Calandrinia, Capsella, Chamaesyce, Chenopodium, Cuscuta, Erodium, Heteranthera, Ipomoea, Lactuca, Lamium, Mollugo, Persicaria, Polygonum, Pontederia, Portulaca, Richardia, Schoenoplectiella, Senecio, Sida, Sinapis, Sisymbrium, Solanum, Stellaria and Tribulus, more preferably selected from the genera Echinochloa and Leptochloa.

13. The method according to any one of claims 1 to 12 wherein the undesirable vegetation is selected from Aegilops cylindrical (AEGCY, jointed goatgrass), Avena fatua (AVEFA, wild oat), Brachiaria platyphylla (BRAPP, broadleaf signalgrass), Brachiaria texana (PANTA, Texas panicum), Bromus commutato (BROCO, hairy chess), Bromus japonicus (BROJA, Japanese brome), Bromus secalinus (BROSE, cheat), Bromus tectorum (BROTE, downy brome), Cenchrus spinifex (CCHPA, field sandbur), Chloris barbata (CHRBA, swollen fingergrass), Cyperus difformis (CYPDI, small-flower umbrella sedge), Cyperus eragrostis (CYPER, lovegrass sedge), Dactyloctenium aegyptium (DTTAE, crowfoot grass), Digitaria sanguinalis (DIGSA, large crabgrass), Echinochloa colonum (ECHCO, jungle rice), Echinochloa crus-galli (ECHCG, common barnyard grass), Echinochloa muricata (ECHPU, prickly barnyardgrass), Echinochloa muricata var. microstachya (ECHCM, rough barnyardgrass), Echinochloa oryzicola (ECHCR, late watergrass), Echinochloa oryzoides (ECHOR, early watergrass), Echinochloa walteri (ECHWA, water millet), Eleusine indica (ELEIN, goosegrass), Eriochloa villosa (ERBVI, woolly cupgrass) , Leptochloa fusca subsp. uninervia (LEFUN, Mexican sprangletop), Leptochloa fusca subsp. fascicularis (LEFFA, bearded sprangletop), Lolium multiflorum (LOLMU, Italian ryegrass), Lolium rigidum (LOLRI, annual ryegrass), Panicum capillare (PANCA, witchgrass), Panicum dichotomiflorum (PANDI, fall panicum), Panicum miliaceum (PANMI, wild proso millet), Phalaris canariensis (PHACA, canarygrass), Poa annua (POAAN, annual bluegrass), Rottboellia cochinchinensis (ROOEX, itch grass), Setaria faberi (SETFA, giant foxtail), Setaria pumila (SETPU, yellow foxtail), Setaria viridis (SETVI, green foxtail), Sorghum halepense (SORHA, Johnson grass), Sorghum x drummondii (SORSU, shattercane), Urochloa fusca (PANFA, browntop panicum), Urochloa maxima (PANMA, guineagrass), Abutilon theophrasti (ABUTH, velvet leaf), Amaranthus palmeri (AMAPA, Palmer amaranth), Amaranthus retroflexus (AMARE, pigweed), Amaranthus tuberculatus (AMATU, tall waterhemp), Ammannia auriculata (AMMAU, redstem), Ammannia coccinea (AMMCO, purple redstem), Amsinckia menziesii (ANSME, fiddleneck), Anchusa arvensis (LYCAR, small bugloss), Bacopa monnieri (BAOMO, Monnier water hyssop), Barbarea vulgaris (BARVU, bittercress), Bassia scoparia (KCHSC, kochia), Brassica nigra (BRSNI, black mustard), Calandrinia ciliata subsp. menziesii (CLNCM, redmaids rock purslane), Capsella bursa-pastoris (CAPBP, shepherd's purse), Chamaesyce maculata (EPHMA, annual spurge), Chenopodium album (CHEAL, common lambsquarters), Chenopodium leptophyllum (CHELE, slimleaf lambsquarters), Cuscuta europaea (CVCAU, large dodder), Erodium cicutarium (EROCI, redstem filaree), Heteranthera limosa (HETLI, duck salad), Ipomoea hederacea (IPOHE, morningglory), Lactuca serriola (LACSE, prickly lettuce), Lamium amplexicaule (LAMAM, henbit), Mollugo verticillata (MOLVE, carpetweed), Persicaria maculosa (POLPE, ladysthumb), Persicaria pensylvanica (POLPY, Pennsylvania smartweed), Polygonum aviculare (POLAV, prostrate knotweed), Pontederia vaginalis (MOOVA, monochoria), Portulaca oleracea (POROL, purslane), Richardia scabra (RCHSC, Florida pusley), Schoenoplectiella mucronata (SCPMU, rice-field bulrush), Senecio vulgaris (SENVU, common groundsel), Sida spinosa (SIDSP, prickly sida), Sinapis arvensis (SINAR, wild mustard), Sisymbrium irio (SSYIR, London rocket), Solanum nigrum (SOLNI, black nightshade), Stellaria media (STEME, common chickweed) and Tribulus terrestris (TRBTE, common puncturevine).

14. The method according to any one of claims 1 to 13 wherein the undesirable vegetation is selected from Cyperus difformis (CYPDI, small-flower umbrella sedge), Echinochloa crusgalli (ECHCG, common barnyard grass), Echinochloa oryzicola (ECHCR, late watergrass), Leptochloa fusca subsp. fascicularis (LEFFA, bearded sprangletop), Ammannia auriculata (AMMAU, redstem), Bacopa monnieri (BAOMO, Monnier water hyssop), Heteranthera limosa (HETLI, duck salad), Pontederia vaginalis (MOOVA, monochoria), and Schoenoplectiella mucronata (SCPMU, rice-field bulrush), more preferably selected from Echinochloa crus-galli (ECHCG, common barnyard grass), Echinochloa oryzicola (ECHCR, late watergrass) and Leptochloa fusca subsp. fascicularis (LEFFA, bearded sprangletop).

15. The method according to any one of claims 1 to 14 wherein the composition comprising pendimethalin is applied in combination with at least one further herbicide B selected from the groups b1) to b15)
b1) lipid biosynthesis inhibitors;
b2) acetolactate synthase inhibitors (ALS inhibitors);
b3) photosynthesis inhibitors;
b4) protoporphyrinogen-IX oxidase inhibitors,
b5) bleacher herbicides;
b6) enolpyruvyl shikimate 3-phosphate synthase inhibitors (EPSP inhibitors);
b7) glutamine synthetase inhibitors;
b8) 7,8-dihydropteroate synthase inhibitors (DHP inhibitors);
b9) mitosis inhibitors;
b10) inhibitors of the synthesis of very long chain fatty acids (VLCFA inhibitors);
b11) cellulose biosynthesis inhibitors;
b12) decoupler herbicides;
b13) auxinic herbicides;
b14) auxin transport inhibitors; and
b15) other herbicides selected from the group consisting of bromobutide, chlorflurenol, chlorflurenol-methyl, cinmethylin, cumyluron, dalapon, dazomet, difenzoquat, difenzoquat-metilsulfate, dimethipin, DSMA, dymron, endothal and its salts, etobenzanid, flamprop, flamprop-isopropyl, flamprop-methyl, flamprop-M-isopropyl, flamprop-M-methyl, flurenol, flurenol-butyl, flurprimidol, fosamine, fosamine-ammonium, indanofan, indaziflam, maleic hydrazide, mefluidide, metam, methiozolin, methyl azide, methyl bromide, methyl-dymron, methyl iodide, MSMA, oleic acid, oxaziclomefone, pelargonic acid, pyributicarb, quinoclamine, tetflupyrolimet, triaziflam, tridiphane and 6-chloro-3-(2-cyclopropyl-6-methylphenoxy)-4-pyridazinol (CAS 499223-49-3) and its salts and esters;
and agriculturally acceptable salts or derivatives thereof.

16. The method according to any one of claims 1 to 15 wherein the composition comprising pendimethalin is applied in combination with at least one safener C selected from benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthaleneacetic acid (NAA), naphthalic anhydride (NA), oxabetrinil, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4), metcamifen, 4-bromophenyl chloromethyl sulfone (BPCMS, CAS 54091-06-4) and agriculturally acceptable salts or derivatives thereof.

## Patentansprüche

1. Verfahren zur Bekämpfung von unerwünschtem Pflanzenwuchs in einer aquatischen Umgebung, in der eine Reispflanze wächst, wobei das Verfahren das Ausbringen einer herbizid wirksamen Menge einer Zusammensetzung, die Pendimethalin umfasst, auf die aquatische Umgebung vor dem Auflaufen des unerwünschten Pflanzenwuchses und nach der Keimung der Reissetzlinge umfasst, wobei Pendimethalin in der Zusammensetzung in Form von Mikrokapseln vorliegt.

2. Verfahren nach Anspruch 1, wobei die Zusammensetzung, die Pendimethalin umfasst, in das Wasser oder auf die Wasseroberfläche der aquatischen Umgebung ausgebracht wird.

3. Verfahren nach Anspruch 1 oder 2, wobei es sich bei der aquatischen Umgebung um ein geflutetes Reisfeld, ein geflutetes Reispaddy, einen Teich oder einen See handelt.

4. Verfahren nach einem der Ansprüche 1 bis 3, wobei es sich bei der Zusammensetzung um eine Kapselsuspension (CS), die Pendimethalin umfasst, oder eine durch Verdünnen der Kapselsuspension (CS) mit Wasser erhaltene verdünnte wässrige Suspension handelt.

5. Verfahren nach Anspruch 4, wobei der D₅₀-Wert der Kapseln in der Kapselsuspension (CS) bzw. der verdünnten wässrigen Suspension im Bereich von 1 bis 100 µm liegt.

6. Verfahren nach einem der Ansprüche 1 bis 5, wobei die Reispflanze aus geflutetem trocken ausgesätem, in Furchen ausgesätem, nass ausgesätem, mit Wasser ausgesätem und verpflanztem Reis ausgewählt ist.

7. Verfahren nach einem der Ansprüche 1 bis 6, wobei die Zusammensetzung, die Pendimethalin umfasst, vom 2-Blatt- bis zum 6-Blatt-Wachstumsstadium der Reissetzlinge (BBCH-Code 12 bis 16) ausgebracht wird.

8. Verfahren nach einem der Ansprüche 1 bis 7, wobei die Zusammensetzung, die Pendimethalin umfasst, in Aufwandmengen von 0,1 bis 10 Kilogramm Wirkstoff pro Hektar (kg ai/ha), weiter bevorzugt 1 bis 5 kg ai/ha, noch weiter bevorzugt 1 bis 4 kg ai/ha, noch weiter bevorzugt von 1 bis 3 kg ai/ha und insbesondere von 1 bis 2,5 kg ai/ha ausgebracht wird.

9. Verfahren nach einem der Ansprüche 1 bis 8, wobei die Zusammensetzung, die Pendimethalin umfasst, 5 bis 15 Tage, weiter bevorzugt 5 bis 10 Tage und noch weiter bevorzugt 7 bis 10 Tage nach dem Aussäen der Reissetzlinge oder nach dem Verpflanzen der Reispflanzen ausgebracht wird.

10. Verfahren nach einem der Ansprüche 1 bis 9, wobei der unerwünschte Pflanzenwuchs eine herbizidresistente oder -tolerante Unkrautart umfasst.

11. Verfahren nach Anspruch 10, wobei es sich bei der herbizidresistenten oder -toleranten Unkrautart um einen Biotyp mit Resistenz bzw. Toleranz gegenüber mindestens einem aus der Gruppe bestehend aus Acetyl-CoA-carboxylase(ACCase)-Hemmern (HRAC-Gruppe A), Acetolactatsynthase(ALS)-Hemmern (HRAC-Gruppe B), Photosystem-II(PS-II)-Hemmern (HRAC-Gruppen C1, C2 und C3), DOXP-Synthasehemmern (HRAC-Gruppe F4) und Very-Long-Chain-Fatty-Acid(VLCFA)-Hemmern (HRAC-Gruppe K3) bestehenden Gruppe ausgewählten Herbizid handelt.

12. Verfahren nach einem der Ansprüche 1 bis 11, wobei der unerwünschte Pflanzenwuchs aus den Gattungen Aegilops, Avena, Brachiaria, Bromus, Cenchrus, Chloris, Cyperus, Dactyloctenium, Digitaria, Echinochloa, Eleusine, Eriochloa, Leptochloa, Lolium, Panicum, Phalaris, Poa, Rottboellia, Setaria, Sorghum, Urochloa, Abutilon, Amaranthus, Ammannia, Amsinckia, Anchusa, Bacopa, Barbarea, Bassia, Brassica, Calandrinia, Capsella, Chamaesyce, Chenopodium, Cuscuta, Erodium, Heteranthera, Ipomoea, Lactuca, Lamium, Mollugo, Persicaria, Polygonum, Pontederia, Portulaca, Richardia, Schoenoplectiella, Senecio, Sida, Sinapis, Sisymbrium, Solanum, Stellaria und Tribulus und weiter bevorzugt aus den Gattungen Echinochloa und Leptochloa ausgewählt ist.

13. Verfahren nach einem der Ansprüche 1 bis 12, wobei der unerwünschte Pflanzenwuchs ausgewählt ist aus Aegilops cylindrica (AEGCY, walzenförmigem Walch), Avena fatua (AVEFA, Flughafer), Brachiaria platyphylla (BRAPP, Breitblättrigem Signalgras), Brachiaria texana (PANTA, Texashirse), Bromus commutato (BROCO, Wiesentrespe), Bromus japonicus (BROJA, Japanischer Trespe), Bromus secalinus (BROSE, Roggentrespe), Bromus tectorum (BROTE, Dachtrespe), Cenchrus spinifex (CCHPA, "Field Sandbur"), Chloris barbata (CHRBA, Bärtigem Gilbgras), Cyperus difformis (CYPDI, Missgestaltetem Zypergras), Cyperus eragrostis (CYPER, Frischgrünem Zypergras), Dactyloctenium aegyptium (DTTAE, Krähenfußgras), Digitaria sanguinalis (DIGSA, Blutfingerhirse), Echinochloa colonum (ECHCO, Schamahirse), Echinochloa crus-galli (ECHCG, Hühnerhirse), Echinochloa muricata (ECHPU, "Prickly Barnyardgrass"), Echinochloa muricata var. microstachya (ECHCM, "Rough Barnyardgrass"), Echinochloa oryzicola (ECHCR, "Late Watergrass"), Echinochloa oryzoides (ECHOR, "Early Watergrass"), Echinochloa walteri (ECHWA, "Water Millet"), Eleusine indica (ELEIN, Indischer Fingerhirse), Eriochloa villosa (ERBVI, "Woolly Cupgrass"), Leptochloa fusca subsp. uninervia (LEFUN, "Mexican Sprangletop"), Leptochloa fusca subsp. fascicularis (LEFFA, Buschigem Steifhalm), Lolium multiflorum (LOLMU, Italienischem Raygras), Lolium rigidum (LOLRI, Steifem Lolch), Panicum capillare (PANCA, Haarästiger Rispenhirse), Panicum dichotomiflorum (PANDI, Gabelästiger Rispenhirse), Panicum miliaceum (PANMI, Echter Rispenhirse), Phalaris canariensis (PHACA, Kanariengras), Poa annua (POAAN, Einjährigem Rispengras), Rottboellia cochinchinensis (ROOEX, "Itch Grass"), Setaria faberi (SETFA, Fabers Borstenhirse), Setaria pumila (SETPU, Roter Borstenhirse), Setaria viridis (SETVI, Grüner Borstenhirse), Sorghum halepense (SORHA, Wilder Sorghumhirse), Sorghum x drummondii (SORSU, Sorghumhirse), Urochloa fusca (PANFA, "Browntop panicum"), Urochloa maxima (PANMA, Guineagras), Abutilon theophrasti (ABUTH, Samtpappel), Amaranthus palmeri (AMAPA, Palmer-Amaranth), Amaranthus retroflexus (AMARE, Zurückgebogenem Amaranth), Amaranthus tuberculatus (AMATU, Warzenfrüchtigem Fuchsschwanz), Ammannia auriculata (AMMAU, "Redstem"), Ammannia coccinea (AMMCO, "Purple Redstem"), Amsinckia menziesii (ANSME, "Fiddleneck"), Anchusa arvensis (LYCAR, Acker-Ochsenzunge), Bacopa monnieri (BAOMO, Kleinem Fettblatt), Barbarea vulgaris (BARVU, Winterkresse), Bassia scoparia (KCHSC, Besen-Radmelde), Brassica nigra (BRSNI, Schwarzem Senf), Calandrinia ciliata subsp. menziesii (CLNCM, "Redmaids Rock Purslane"), Capsella bursa-pastoris (CAPBP, Gewöhnlichem Hirtentäschel), Chamaesyce maculata (EPHMA, Gefleckter Wolfsmilch), Chenopodium album (CHEAL, Weißem Gänsefuß), Chenopodium leptophyllum (CHELE, schmalblättrigem Gänsefuß), Cuscuta europaea (CVCAU, Europäischer Seide), Erodium cicutarium (EROCI, Gewöhnlichem Reiherschnabel), Heteranthera limosa (HETLI, Schlamm-Trugkölbchen), Ipomoea hederacea (IPOHE, Efeu-Prunkwinde), Lactuca serriola (LACSE, Stachel-Lattich), Lamium amplexicaule (LAMAM, Stängelumfassender Taubnessel), Mollugo verticillata (MOLVE, Quirligem Teppichkraut), Persicaria maculosa (POLPE, Floh-Knöterich), Persicaria pensylvanica (POLPY, Pennsylvanischem Knöterich), Polygonum aviculare (POLAV, prostrate knotweed), Pontederia vaginalis (MOOVA, Monochoria), Portulaca oleracea (POROL, Portulak), Richardia scabra (RCHSC, "Florida Pusley"), Schoenoplectiella mucronata (SCPMU, Stachelspitziger Teichbinse), Senecio vulgaris (SENVU, Gewöhnlichem Greiskraut), Sida spinosa (SIDSP, Dorn-Malvinde), Sinapis arvensis (SINAR, Acker-Senf), Sisymbrium irio (SSYIR, Glanz-Rauke), Solanum nigrum (SOLNI, Schwarzem Nachtschatten), Stellaria media (STEME, Gewöhnlicher Vogelmiere) und Tribulus terrestris (TRBTE, Erd-Burzeldorn).

14. Verfahren nach einem der Ansprüche 1 bis 13, wobei der unerwünschte Pflanzenwuchs aus Cyperus difformis (CYPDI, Missgestaltetem Zypergras), Echinochloa crusgalli (ECHCG, Hühnerhirse), Echinochloa oryzicola (ECHCR, "Late Watergrass"), Leptochloa fusca subsp. fascicularis (LEFFA, Buschigem Steifhalm), Ammannia auriculata (AMMAU, "Redstem"), Bacopa monnieri (BAOMO, Kleinem Fettblatt), Heteranthera limosa (HETLI, Schlamm-Trugkölbchen), Pontederia vaginalis (MOOVA, Monochoria) und Schoenoplectiella mucronata (SCPMU, Stachelspitziger Teichbinse) ausgewählt ist und weiter bevorzugt aus Echinochloa crus-galli (ECHCG, Hühnerhirse), Echinochloa oryzicola (ECHCR, "Late Watergrass") und Leptochloa fusca subsp. fascicularis (LEFFA, Buschigem Steifhalm) ausgewählt ist.

15. Verfahren nach einem der Ansprüche 1 bis 14, wobei die Zusammensetzung, die Pendimethalin umfasst, in Kombination mit mindestens einem weiteren Herbizid B ausgebracht wird, welches ausgewählt wird aus den Gruppen b1) bis b15) :
b1) Lipid-Biosynthese-Inhibitoren;
b2) Acetolactatsynthase-Inhibitoren (ALS-Inhibitoren);
b3) Photosynthese-Inhibitoren;
b4) Protoporphyrinogen-IX-oxidase-Inhibitoren;
b5) Bleacher-Herbizide;
b6) Enolpyruvylshikimat-3-phosphatsynthasehemmer (EPSP-Inhibitoren);
b7) Glutaminsynthetase-Inhibitoren;
b8) 7,8-Dihydropteroatsynthas-Inhibitoren (DHP-Inhibitoren);
b9) Mitose-Inhibitoren;
b10) Inhibitoren der Synthese von Fettsäuren mit sehr langen Ketten (Very Long Chain Fatty Acids, VLCFA) (VLCFA-Inhibitoren);
b11) Cellulose-Biosynthese-Inhibitoren;
b12) Entkoppler-Herbizide;
b13) Auxin-Herbizide;
b14) Auxin-Transport-Inhibitoren; und
b15) sonstige Herbizide, ausgewählt aus der Gruppe bestehend aus Bromobutid, Chlorflurenol, Chlorflurenolmethyl, Cinmethylin, Cumyluron, Dalapon, Dazomet, Difenzoquat, Difenzoquat-metilsulfat, Dimethipin, DSMA, Dymron, Endothal und dessen Salzen, Etobenzanid, Flamprop, Flamprop-isopropyl, Flamprop-methyl, Flamprop-M-isopropyl, Flamprop-M-methyl, Flurenol, Flurenolbutyl, Flurprimidol, Fosamin, Fosamin-ammonium, Indanofan, Indaziflam, Maleinsäurehydrazid, Mefluidid, Metam, Methiozolin, Methylazid, Methylbromid, Methyldymron, Methyliodid, MSMA, Ölsäure, Oxaziclomefon, Pelargonsäure, Pyributicarb, Quinoclamin, Tetflupyrolimet, Triaziflam, Tridiphan und 6-Chlor-3-(2-cyclopropyl-6-methylphenoxy)-4-pyridazinol (CAS 499223-49-3) und dessen Salzen und Estern;
und landwirtschaftlich unbedenklichen Salzen oder Derivaten davon.

16. Verfahren nach einem der Ansprüche 1 bis 15, wobei die Zusammensetzung, die Pendimethalin umfasst, in Kombination mit mindestens einem Safener ausgebracht wird, welcher aus Benoxacor, Cloquintocet, Cyometrinil, Cyprosulfamid, Dichlormid, Dicyclonon, Dietholat, Fenchlorazol, Fenclorim, Flurazol, Fluxofenim, Furilazol, Isoxadifen, Mefenpyr, Mephenat, Naphthalinessigsäure (NAA), Naphthalsäureanhydrid (NA), Oxabetrinil, 4-(Dichloracetyl)-1-oxa-4-azaspiro[4.5]decan (MON4660, CAS 71526-07-3), 2,2,5-Trimethyl-3-(dichloracetyl)-1,3-oxazolidin (R-29148, CAS 52836-31-4), Metcamifen, 4-Bromphenyl-chlormethyl-sulfon (BPCMS, CAS 54091-06-4) und landwirtschaftlich unbedenklichen Salzen oder Derivaten davon ausgewählt wird.

## Revendications

1. Procédé de lutte contre la végétation indésirable dans un milieu aquatique dans lequel pousse une plante de riz, ledit procédé comprenant l'application au milieu aquatique d'une quantité efficace sur le plan herbicide d'une composition comprenant de la pendiméthaline avant la levée de la végétation indésirable et après la germination des plantes de riz, la pendiméthaline étant présente dans la composition sous forme de microcapsules.

2. Procédé selon la revendication 1, dans lequel la composition comprenant de la pendiméthaline est appliquée dans l'eau ou sur la surface de l'eau du milieu aquatique.

3. Procédé selon la revendication 1 ou 2, dans lequel le milieu aquatique est un champ de riz inondé, une rizière inondée, une mare ou un lac.

4. Procédé selon l'une quelconque des revendications 1 à 3, dans lequel la composition est une suspension de capsules (CS) comprenant de la pendiméthaline ou une suspension aqueuse diluée obtenue par dilution de la suspension de capsules (CS) avec de l'eau.

5. Procédé selon la revendication 4, dans lequel le D₅₀ des capsules dans la suspension de capsules (CS) ou la suspension aqueuse diluée est compris entre 1 et 100 µm.

6. Procédé selon l'une quelconque des revendications 1 à 5, dans lequel la plante de riz est choisie parmi le riz inondé semé à sec, semé au semoir, semé en sol humide, semé dans l'eau et repiqué.

7. Procédé selon l'une quelconque des revendications 1 à 6, dans lequel la composition comprenant de la pendiméthaline est appliquée du stade de croissance à 2 feuilles au stade de croissance à 6 feuilles des plantes de riz (code BBCH 12 à 16).

8. Procédé selon l'une quelconque des revendications 1 à 7, dans lequel la composition comprenant de la pendiméthaline est appliquée à des taux de 0,1 à 10 kilogrammes de matière active par hectare (kg m.a./ha), plus préférentiellement de 1 à 5 kg m.a./ha, encore plus préférentiellement de 1 à 4 kg m.a./ha, encore plus préférentiellement de 1 à 3 kg m.a./ha et en particulier de 1 à 2,5 kg m.a./ha.

9. Procédé selon l'une quelconque des revendications 1 à 8, dans lequel la composition comprenant de la pendiméthaline est appliquée 5 à 15 jours, plus préférentiellement 5 à 10 jours et encore plus préférentiellement 7 à 10 jours après que les graines de riz ont été semées ou après que les plantes de riz ont été repiquées.

10. Procédé selon l'une quelconque des revendications 1 à 9, dans lequel la végétation indésirable comprend une espèce de mauvaise herbe résistante ou tolérante aux herbicides.

11. Procédé selon la revendication 10, dans lequel l'espèce de mauvaise herbe résistante ou tolérante aux herbicides est un biotype présentant une résistance ou une tolérance à au moins un herbicide choisi dans le groupe constitué par les inhibiteurs de l'acétyl-CoA carboxylase (ACCase) (groupe HRAC A), les inhibiteurs de l'acétolactate synthase (ALS) (groupe HRAC B), les inhibiteurs du photosystème II (PS II) (groupes HRAC C1, C2 et C3), les inhibiteurs de la DOXP synthase (groupe HRAC F4), et les inhibiteurs des acides gras à très longue chaîne (VLCFA) (groupe HRAC K3).

12. Procédé selon l'une quelconque des revendications 1 à 11, dans lequel la végétation indésirable est choisie parmi les genres Aegilops, Avena, Brachiaria, Bromus, Cenchrus, Chloris, Cyperus, Dactyloctenium, Digitaria, Echinochloa, Eleusine, Eriochloa, Leptochloa, Lolium, Panicum, Phalaris, Poa, Rottboellia, Setaria, Sorghum, Urochloa, Abutilon, Amaranthus, Ammannia, Amsinckia, Anchusa, Bacopa, Barbarea, Bassia, Brassica, Calandrinia, Capsella, Chamaesyce, Chenopodium, Cuscuta, Erodium, Heteranthera, Ipomoea, Lactuca, Lamium, Mollugo, Persicaria, Polygonum, Pontederia, Portulaca, Richardia, Schoenoplectiella, Senecio, Sida, Sinapis, Sisymbrium, Solanum, Stellaria et Tribulus, plus préférentiellement choisie parmi les genres Echinochloa et Leptochloa.

13. Procédé selon l'une quelconque des revendications 1 à 12, dans lequel la végétation indésirable est choisie parmi Aegilops cylindrica (AEGCY, égilope cylindrique), Avena fatua (AVEFA, folle avoine), Brachiaria platyphylla (BRAPP, « broadleaf signalgrass »), Brachiaria texana (PANTA, panic du Texas), Bromus commutatus (BROCO, brome des champs), Bromus japonicus (BROJA, brome du Japon), Bromus secalinus (BROSE, brome seigle), Bromus tectorum (BROTE, brome des toits), Cenchrus spinifex (CCHPA, cenchre épineux), Chloris barbata (CHRBA, chloride barbue), Cyperus difformis (CYPDI, souchet difforme), Cyperus eragrostis (CYPER, souchet vigoureux), Dactyloctenium aegyptium (DTTAE, dactylocténion d'Égypte), Digitaria sanguinalis (DIGSA, digitaire sanguine), Echinochloa colonum (ECHCO, blé du Dekkan), Echinochloa crus-galli (ECHCG, panic pied-de-coq), Echinochloa muricata (ECHPU, échinochloa épineux), Echinochloa muricata var. microstachya (ECHCM, « rough barnyardgrass »), Echinochloa oryzicola (ECHCR, panic faux riz), Echinochloa oryzoides (ECHOR, échinochloa faux riz), Echinochloa walteri (ECHWA, échinochloa de Walter), Eleusine indica (ELEIN, éléusine des Indes), Eriochloa villosa (ERBVI, ériochloa velu), Leptochloa fusca subsp. uninervia (LEFUN, « Mexican sprangletop »), Leptochloa fusca subsp. fascicularis (LEFFA, « bearded sprangletop »), Lolium multiflorum (LOLMU, Ivraie multiflore), Lolium rigidum (LOLRI, Ivraie raide), Panicum capillare (PANCA, panic capillaire), Panicum dichotomiflorum (PANDI, panic à fleurs dichotomes), Panicum miliaceum (PANMI, millet cultivé), Phalaris canariensis (PHACA, alpiste des Canaries), Poa annua (POAAN, pâturin annuel), Rottboellia cochinchinensis (ROOEX, rottboellie de Cochinchine), Setaria faberi (SETFA, sétaire de Faber), Setaria pumila (SETPU, sétaire glauque), Setaria viridis (SETVI, sétaire verte), Sorghum halepense (SORHA, sorgho d'Alep), Sorghum × drummondii (SORSU, sorgho de Drummond), Urochloa fusca (PANFA, « browntop panicum »), Urochloa maxima (PANMA, herbe de Guinée), Abutilon theophrasti (ABUTH, abutilon de Théophraste), Amaranthus palmeri (AMAPA, amarante de Palmer), Amaranthus retroflexus (AMARE, amarante réfléchie), Amaranthus tuberculatus (AMATU, amarante tuberculée), Ammannia auriculata (AMMAU, « redstem »), Ammannia coccinea (AMMCO, ammannia écarlate), Amsinckia menziesii (ANSME, grémil à petites fleurs), Anchusa arvensis (LYCAR, buglosse des champs), Bacopa monnieri (BAOMO, hysope d'eau), Barbarea vulgaris (BARVU, barbarée commune), Bassia scoparia (KCHSC, bassie a balais), Brassica nigra (BRSNI, moutarde noire), Calandrinia ciliata subsp. menziesii (CLNCM, « redmaids rock purslane »), Capsella bursa-pastoris (CAPBP, bourse-à-berger), Chamaesyce maculata (EPHMA, euphorbe maculée), Chenopodium album (CHEAL, chénopode blanc), Chenopodium leptophyllum (CHELE, « slimleaf lambsquarters »), Cuscuta europaea (CVCAU, cuscute d'Europe), Erodium cicutarium (EROCI, érodium à feuilles de ciguë), Heteranthera limosa (HETLI, hétéranthère des marais), Ipomoea hederacea (IPOHE, ipomée lierre), Lactuca serriola (LACSE, laitue sauvage), Lamium amplexicaule (LAMAM, lamier amplexicaule), Mollugo verticillata (MOLVE, mollugine), Persicaria maculosa (POLPE, renouée persicaire), Persicaria pensylvanica (POLPY, renouée de Pennsylvanie), Polygonum aviculare (POLAV, renouée des oiseaux), Pontederia vaginalis (MOOVA, « monochoria »), Portulaca oleracea (POROL, pourpier potager), Richardia scabra (RCHSC, « Florida pusley »), Schoenoplectiella mucronatus (SCPMU, scirpe mucroné), Senecio vulgaris (SENVU, séneçon commun), Sida spinosa (SIDSP, sida épineuse), Sinapis arvensis (SINAR, moutarde des champs), Sisymbrium irio (SSYIR, sisymbre irio), Solanum nigrum (SOLNI, morelle noire), Stellaria media (STEME, stellaire intermédiaire), et Tribulus terrestris (TRBTE, tribule terrestre).

14. Procédé selon l'une quelconque des revendications 1 à 13, dans lequel la végétation indésirable est choisie parmi Cyperus difformis (CYPDI, souchet difforme), Echinochloa crus-galli (ECHCG, panic pied-de-coq), Echinochloa oryzicola (ECHCR, panic faux riz), Leptochloa fusca subsp. fascicularis (LEFFA, « bearded sprangletop »), Ammannia auriculata (AMMAU, « redstem »), Bacopa monnieri (BAOMO, hysope d'eau), Heteranthera limosa (HETLI, hétéranthère des marais), Pontederia vaginalis (MOOVA, « monochoria »), et Schoenoplectiella mucronatus (SCPMU, scirpe mucroné), plus préférentiellement choisie parmi Echinochloa crus-galli (ECHCG, panic pied-de-coq), Echinochloa oryzicola (ECHCR, panic faux riz) et Leptochloa fusca subsp. fascicularis (LEFFA, « bearded sprangletop »).

15. Procédé selon l'une quelconque des revendications 1 à 14, dans lequel la composition comprenant de la pendiméthaline est appliquée en association avec au moins un autre herbicide B choisi parmi les groupes b1) à b15)
b1) inhibiteurs de la biosynthèse des lipides ;
b2) inhibiteurs de l'acétolactate synthase (inhibiteurs d'ALS) ;
b3) inhibiteurs de la photosynthèse ;
b4) inhibiteurs de la protoporphyrinogène IX oxydase,
b5) herbicides provoquant le blanchiment ;
b6) inhibiteurs de l'énolpyruvyl-shikimate 3-phosphate synthase (inhibiteurs de l'EPSP) ;
b7) inhibiteurs de la glutamine synthétase ;
b8) inhibiteurs de la 7,8-dihydroptéroate synthase (inhibiteurs de DHP) ;
b9) inhibiteurs de la mitose ;
b10) inhibiteurs de la synthèse des acides gras à très longue chaîne (inhibiteurs de VLCFA) ;
b11) inhibiteurs de la biosynthèse de la cellulose ;
b12) herbicides découplants ;
b13) herbicides auxiniques ;
b14) inhibiteurs du transport de l'auxine ; et
b15) autres herbicides choisis dans le groupe constitué par les suivants : bromobutide, chlorflurénol, chlorflurénol-méthyl, cinméthyline, cumyluron, dalapon, dazomet, difenzoquat, difenzoquat-méthylsulfate, diméthipine, DSMA, dymron, endothal et ses sels, étobenzanide, flamprop, flamprop-isopropyl, flamprop-méthyl, flamprop-M-isopropyl, flamprop-M-méthyl, flurénol, flurénol-butyl, flurprimidol, fosamine, fosamine-ammonium, indanofan, indaziflame, hydrazide maléique, méfluidide, métam, méthiozoline, azoture de méthyle, bromure de méthyle, méthyl-dymron, iodure de méthyle, MSMA, acide oléique, oxazicloméfone, acide pélargonique, pyributicarbe, quinoclamine, tetflupyrolimet, triaziflame, tridiphane et 6-chloro-3-(2-cyclopropyl-6-méthylphénoxy)-4-pyridazinol (CAS 499223-49-3) et ses sels et esters ;
et des sels ou dérivés acceptables sur le plan agricole de ceux-ci.

16. Procédé selon l'une quelconque des revendications 1 à 15, dans lequel la composition comprenant de la pendiméthaline est appliquée en association avec au moins un phytoprotecteur C choisi parmi les suivants : bénoxacor, cloquintocet, cyométrinil, cyprosulfamide, dichlormide, dicyclonone, diétholate, fenchlorazole, fenclorim, flurazole, fluxofénime, furilazole, isoxadifène, méfenpyr, méphénate, acide naphtalèneacétique (NAA), anhydride naphtalique (NA), oxabétrinil, 4-(dichloroacétyl)-1-oxa-4-azaspiro[4.5]décane (MON4660, CAS 71526-07-3), 2,2,5-triméthyl-3-(dichloroacétyl)-1,3-oxazolidine (R-29148, CAS 52836-31-4), metcamifène, 4-bromophényl-chlorométhylsulfone (BPCMS, CAS 54091-06-4) et des sels ou dérivés acceptables sur le plan agricole de ceux-ci.
